# FASCICULE DE BREVET EUROPEEN

(11) **EP 3 755 749 B1**
(45) Date de publication et mention de la délivrance du brevet: **10.09.2025**
(21) Numéro de dépôt: 19710062.1
(22) Date de dépôt: 19.02.2019
(51) Int. Cl.: B32B 1/08, B32B 27/08, B32B 27/18, B32B 27/20, B32B 27/22, B32B 27/30, B32B 27/34, C08L 77/02, C08L 77/06, B60K 15/03, F16L 11/04, F16L 11/06, F16L 11/15

(54) **STRUCTURE TUBULAIRE ANNELÉE DESTINÉE AU TRANSPORT DE CARBURANT DANS LE RÉSERVOIR**
RINGFÖRMIGE ROHRSTRUKTUR ZUM TRANSPORTIEREN VON KRAFTSTOFF IN EINEN TANK
ANNULATED TUBULAR STRUCTURE INTENDED FOR TRANSPORTING FUEL INTO THE TANK

(30) Priorité: 21.02.2018 FR 1851461
(43) Date de publication de la demande: 30.12.2020
(73) Titulaire: ARKEMA FRANCE, 92800 Puteaux (FR)
(72) Inventeur: HACHET, Emilie, 27670 LE BOSC ROGER EN ROUMOIS (FR); MONTANARI, Thibaut, 27470 SERQUIGNY (FR); DUFAURE, Nicolas, 27470 SERQUIGNY (FR)
(74) Mandataire: Arkema Patent
(86) Numéro de dépôt international: PCT/FR2019/050365
(87) Numéro de publication internationale: WO 2019/162604

(56) Documents cités:
- WO-A1-2007/029424
- US-A1- 2007 075 543
- US-A1- 2011 277 867

## Description

L'invention concerne une structure tubulaire flexible en partie annelée destinée au transport d'un carburant, en particulier d'essence ou de diesel, notamment d'essence, dans le réservoir d'un véhicule à moteur.

L'invention porte plus particulièrement sur une structure tubulaire monocouche ou multicouche, se situant au moins partiellement à l'intérieur du réservoir de carburant et pouvant être au moins partiellement immergée dans le réservoir du véhicule.

Ladite structure tubulaire monocouche ou multicouche est donc destinée à être au moins partiellement à l'intérieur du réservoir de carburant et pouvant être au moins partiellement immergée dans le réservoir du véhicule.

Les carburants utilisés actuellement dans les véhicules à moteur comprennent de plus en plus de composés corrosifs tels que du méthanol ou de l'éthanol.

Les composés alcoolisés ainsi que d'autres composés présents dans les carburants transportés provoquent la dissolution et la diffusion d'espèces, notamment de monomères et oligomères issus du tube en contact avec l'essence, le tube étant typiquement constitué de matériaux aliphatiques tels que des polyamides aliphatiques comme le PA 11 ou le PA 12.

Les constructeurs automobiles deviennent de plus en plus exigeants sur la quantité d'extractibles tels que les monomères/oligomères dissouts dans l'essence, qui sont plus susceptibles de boucher les injecteurs.

Selon le brevet US 5,076,329, une couche de PA 6 en tant que couche intérieure permet d'éliminer au moins partiellement le problème d'excès d'extractibles qui aurait lieu avec du PA 12 en couche intérieure d'un tuyau de transport d'essence comprenant cinq couches. L'utilisation d'un système à cinq couches permet d'obtenir un tuyau avec une résistance à l'impact du PA 12 avec un faible taux de monomères /oligomères.

Néanmoins, selon le document WO 94/09303, ces caractéristiques ne peuvent pas être obtenues avec un tuyau comprenant moins de cinq couches.

Ce document préconise alors l'utilisation d'un tuyau bicouche ou tricouche en partie annelé comprenant pour le bicouche une couche extérieure qui peut être en PA 11 ou PA 12, et une couche intérieure qui n'est pas en polyamide et choisie parmi des composés fluorés tels que le PVDF. Dans le cadre du tricouche, une couche de liaison, notamment en PVDF, est alors introduite entre la couche extérieure et la couche intérieure.

Cependant ces tuyaux présentent une température d'utilisation entre -40°C et 150°C et sont utilisés pour des moteurs de véhicules.

EP 1039199 décrit des tuyaux en partie annelés pour une utilisation pour le transport d'essence comprenant au moins deux couches, une couche extérieure en polyamide et une couche intérieure en fluorure de tetrafluoroéthylène-hexafluoropropylène-vinylidène (THV).

Néanmoins, ce document précise que la couche externe protège le tuyau par exemple du choc provoqué par une pierre lorsque la voiture roule et qu'il est préférable que la résine possède un certain niveau de résistance à l'élongation et au choc, ce qui implique que l'utilisation de ce tuyau est destinée au transport d'essence après le réservoir ou dans le moteur.

US 2011/277867 divulgue un tube annelé comprenant une couche à base de polyamide 11 plastifié.

US 2007/075543 divulgue un tube annelé comprenant une couche à base de polyamide 11.

WO 2007/029424 divulgue un tube annelé comprenant une couche à base de polyamide, en particulier le nylon 6 ou le nylon 66.

Il est donc nécessaire pour une utilisation du tuyau dans le réservoir du véhicule de pouvoir disposer d'un tuyau qui, quoique pouvant être immergé au moins partiellement dans le carburant du véhicule, présente une quantité d'extractibles qui soit inférieure à celle des tuyaux de l'art antérieur ci-dessus et satisfasse les exigences des constructeurs.

Ceci a été résolu par la structure flexible en partie annelée de l'invention.

La présente invention concerne donc une structure tubulaire flexible en partie annelée destinée à être placée au moins partiellement à l'intérieur du réservoir de carburant, en particulier d'essence ou de diesel, notamment d'essence, d'un véhicule, ladite structure pouvant être au moins partiellement immergée dans ledit réservoir et destinée au transport dudit carburant dans ledit réservoir,
ladite structure tubulaire comprenant au moins une couche (1) constituée d'une composition constituée de
   a. de 39% à 100% en poids, en particulier de 41% à 100% en poids d'au moins un polyamide aliphatique de formule W/Z dans laquelle :
      W est un motif répétitif aliphatique obtenu à partir de la polycondensation d'au moins un lactame en C₆ à C₁₈, préférentiellement en C₇ à C₁₃, ou d'au moins un acide aminocarboxylique en C₆ à C₁₈, préférentiellement en C₇ à C₁₃, ou est un motif répétitif aliphatique XY présentant un nombre moyen d'atomes de carbone par atome d'azote noté compris de 6 à 18, préférentiellement de 7 à 13, obtenu à partir de la polycondensation :
         - d'au moins une diamine X en C₆ à C₁₈, ladite diamine étant choisie parmi une diamine aliphatique linéaire ou ramifiée ou un mélange de celles-ci, et
         - d'au moins un diacide carboxylique aliphatique Y en C₆ à C₁₈,
      Z est au moins un motif répétitif polyamide optionnel, Z pouvant être présent jusqu'à 30% en poids par rapport au poids total W/Z, préférentiellement jusqu'à 15% en poids par rapport au poids total W/Z,
   b. de 0 à 2% en poids d'au moins un plastifiant,
   c. de 0% à 20% d'au moins un modifiant choc,
   d. de 0% à 37% en poids d'au moins un additif,
la somme a. + b. + c. + d. étant égale à 100%,
à l'exclusion d'une structure de transport de carburant allant du réservoir jusqu'au moteur du véhicule.

En d'autres termes, ladite structure est destinée à être placée au moins partiellement
à l'intérieur du réservoir de carburant.

Les Inventeurs ont donc trouvés qu'une structure tubulaire comprenant une couche comprenant une composition particulière telle que ci-dessus définie permettait de diminuer fortement la quantité d'extractibles et notamment les « solubles » et de satisfaire ainsi un test d'extractibles de constructeur automobile.

Le terme « flexible » signifie que les capacités de déformation et d'extension de la structure tubulaire permettent la formation d'angles relativement petits permettant d'adapter la structure tubulaire à un espace limité délimité par le réservoir de carburant.

L'expression « se situant au moins partiellement à l'intérieur du réservoir » signifie que plus de 70%, préférentiellement, plus préférentiellement plus de 90%, encore plus préférentiellement plus de 95%, et notamment 100% de la longueur totale du tuyau est située dans le réservoir, une partie dudit tuyau pouvant sortir dudit réservoir pour s'adapter à un tuyau de transport d'essence entre le réservoir et le moteur au moyen notamment d'un connecteur.

Il n'y a donc pas d'autres constituants dans la dite composition que les constituants a, b, c et d dont la somme est égale à 100% en poids.

La couche (1) n'est donc constituée que de ladite composition qui elle-même n'est constituée que des constituants a, b, c et d dont la somme est égale à 100% en poids.

Avantageusement, de 90% à 98% de la longueur totale du tuyau est située dans le réservoir.

Avantageusement, de 95% à 98% de la longueur totale du tuyau est située dans le réservoir.

Plus particulièrement, plus de 98% de la longueur totale du tuyau est située dans le réservoir.

L'expression « en partie annelée » signifie que le tuyau possède une forme tubulaire ondulée sur une partie de sa longueur. La partie annelée peut former une seule portion ou plusieurs portions de la structure, auquel cas deux portions annelées sont séparées par une portion lisse.

La ou les parties annelée(s) permet(tent) d'augmenter la capacité de déformation et d'extension de la structure tubulaire, notamment dans les zones du réservoir ou des angles petits sont nécessaires.

Avantageusement, la structure tubulaire est annelée sur au moins 10% de sa longueur.

Avantageusement, la structure tubulaire est annelée sur une proportion comprise de 10 à plus de 90% de sa longueur.

Avantageusement, la structure tubulaire est annelée sur une proportion de 20 à 90% de sa longueur.

Avantageusement, la structure tubulaire est annelée sur une proportion de 30 à plus de 90% de sa longueur.

Avantageusement, la structure tubulaire est annelée sur une proportion de 40 à plus de 90% de sa longueur.

Avantageusement, la structure tubulaire est annelée sur une proportion de 50 à plus de 90% de sa longueur.

Avantageusement, la structure tubulaire est annelée sur une proportion de 60 à plus de 90% de sa longueur.

Avantageusement, la structure tubulaire est annelée sur une proportion de 70 à plus de 90% de sa longueur.

Avantageusement, la structure tubulaire est annelée sur une proportion de 80 à plus de 90% de sa longueur.

Avantageusement, la structure tubulaire est annelée sur une proportion de plus de 90% de sa longueur.

L'expression « pouvant être au moins partiellement immergée dans ledit réservoir » signifie que ladite structure est soit non immergée, quel que soit le niveau de remplissage du réservoir soit qu'au moins 30% de la longueur de ladite structure est immergée dans le carburant.

Il est bien évident que cette proportion est fonction du niveau de remplissage de carburant dans le réservoir et que les valeurs ainsi données correspondent à un réservoir qui comprend la quantité maximum de carburant qu'il peut contenir.

Avantageusement, au moins 40% de la longueur de ladite structure est immergée dans le carburant.

Avantageusement, au moins 50% de la longueur de ladite structure est immergée dans le carburant.

Avantageusement, au moins 60% de la longueur de ladite structure est immergée dans le carburant.

Avantageusement, au moins 70% de la longueur de ladite structure est immergée dans le carburant.

Avantageusement, au moins 80% de la longueur de ladite structure est immergée dans le carburant.

Dans un autre mode de réalisation, ladite structure se situe au moins partiellement à l'intérieur du réservoir mais n'est pas immergée quel que soit le niveau de remplissage du réservoir.

La structure tubulaire de l'invention est destinée au transport du carburant dans le réservoir et ne concerne donc pas une structure tubulaire de transport de carburant du réservoir jusqu'au moteur ou dans le moteur du véhicule, même si il est bien évident que la structure de l'invention présente une petite partie qui est située à l'extérieure du réservoir.

Néanmoins, cette partie sera fixée à un connecteur permettant de relier la structure tubulaire de l'invention à la structure tubulaire de transport de carburant du réservoir jusqu'au moteur et ne peut donc pas être considérée comme cette dernière structure tubulaire de transport de carburant du réservoir jusqu'au moteur.

Il est bien évident que lorsqu'un plastifiant et/ou un modifiant choc et/ou un additif est ou sont présent(s), l'homme du métier fera varier les proportions de polyamide aliphatique de manière à ce que la somme a. + b. + c. + d. soit égale à 100%.

### S'agissant de la couche (1)

La couche (1) comprend 39% à 100% en poids, en particulier de 41% à 100% en poids d'un polyamide aliphatique de formule W/Z.

Selon la présente demande, le terme "polyamide", également noté PA, vise :
- les homopolymères (ou homopolyamides),
- les copolymères, ou copolyamides, à base de différents motifs amide,
- les alliages de polyamides, dès lors que le polyamide est le constituant majoritaire.

Il existe aussi une catégorie de copolyamides au sens large, qui bien que non préférée, fait partie du cadre de l'invention. Il s'agit des copolyamides comprenant non seulement des motifs amides (qui seront majoritaires, d'où le fait qu'ils soient à considérer comme des copolyamides au sens large), mais aussi des motifs de nature non amide, par exemple des motifs éthers. Les exemples les plus connus sont les PEBA ou polyéther-bloc-amide, et leurs variantes copolyamide-ester-éther, copolyamide-éther, copolyamide ester. Parmi ceux-ci, citons le PEBA-12 où les motifs polyamide sont les mêmes que ceux du PA12, le PEBA-612 où les motifs polyamide sont les mêmes que ceux du PA612.

La nomenclature utilisée pour définir les polyamides est décrite dans la norme ISO 1874-1:1992 "Plastiques -- Matériaux polyamides (PA) pour moulage et extrusion -- Partie 1: Désignation", notamment en page 3 (tableaux 1 et 2) et est bien connue de l'homme du métier.

Dans un mode de réalisation, la structure tubulaire de l'invention est constituée d'au moins une couche (1).

La structure tubulaire peut comprendre plusieurs couches (1) identiques ou différentes, en particulier identiques.

Dans un autre mode de réalisation, la structure tubulaire de l'invention est constituée d'une seule couche (1) mais peut comprendre d'autres couches.

Dans encore un autre mode de réalisation, la structure est monocouche et est constituée d'une seule couche (1).

Dans le cas où la structure tubulaire est monocouche, ladite structure est donc en contact avec l'essence aussi bien de par sa surface externe que par sa surface interne.

### S'agissant du motif répétitif W/Z

### W : motif répétitif aliphatique obtenu à partir de la polycondensation d'au moins un acide aminocarboxylique ou d'au moins un lactame

Dans une première variante de l'invention, le motif répétitif aliphatique W est obtenu à partir de la polycondensation d'au moins un acide aminocarboxylique en C₆-C₁₈, préférentiellement en C₇-C₁₃.

Avantageusement, ledit acide aminocarboxylique comprend de 9 à 12 atomes de carbone. Il peut ainsi être choisi parmi l'acide 9-aminononanoïque (noté 9), l'acide 10-aminodécanoïque (noté 10), l'acide 11-aminoundécanoïque (noté 11) et l'acide 12-aminododécanoïque (noté 12), avantageusement l'acide aminocarboxylique est le l'acide 11-aminoundécanoïque.

Dans une deuxième variante de l'invention, le motif répétitif aliphatique W est obtenu à partir de la polycondensation d'au moins un lactame en en C₆-C₁₈, préférentiellement en C₇-C₁₃.

Avantageusement le lactame comprend de 9 à 12 atomes de carbone. Il peut ainsi être choisi parmi le décanolactame (noté 10), l'undécanolactame (noté 11) et le laurolactame ou lauryllactame (noté 12), avantageusement le lactame est le lauryllactame.

Toutefois, on peut tout à fait envisager de mettre en œuvre, pour l'obtention de ce même motif W, un mélange de deux ou de plusieurs acides aminocarboxyliques, un mélange de deux ou de plusieurs lactames, mais également un mélange d'un, de deux ou de plusieurs acides aminocarboxyliques avec un, deux ou plusieurs lactames.

De manière plus particulièrement préférée, le motif répétitif W est obtenu à partir d'un seul acide aminocarboxylique ou d'un seul lactame.

Dans un mode de réalisation, un motif répétitif contenant au moins 20% de motifs répétitifs obtenu à partir de la polycondensation de motifs issus d'un acide aminocarboxylique ou d'un lactame en C₁₂ en tant que matière première est exclu de la définition de W.

Dans un autre mode de réalisation, un motif répétitif contenant au moins 20% de motifs répétitifs obtenu à partir de la polycondensation de motifs issus d'un acide aminocarboxylique ou d'un lactame en C₁₂ en tant que matière première est exclu de la structure tubulaire flexible de l'invention quel que soit le nombre de couche de ladite structure.

Dans un autre mode de réalisation, un motif répétitif obtenu à partir de la polycondensation d'un lactame ou d'un acide aminocarboxylique en C₁₂ est exclu de la définition de W.

Dans encore un autre mode de réalisation, un motif répétitif obtenu à partir de la polycondensation d'un lactame ou d'un acide aminocarboxylique en C₁₂ en tant que matière première est exclu de la structure tubulaire flexible de l'invention quel que soit le nombre de couche de ladite structure.

### W : motif répétitif aliphatique X.Y

Le motif répétitif aliphatique X.Y est un motif obtenu à partir de la polycondensation d'au moins une diamine aliphatique linéaire ou ramifiée X en C₆-C₁₈, préférentiellement en C₇-C₁₃, ou d'un mélange de celles-ci, et d'au moins un diacide carboxylique aliphatique Y en C₆-C₁₈, préférentiellement en C₇-C₁₃.

Les proportions molaires en diamine et en diacide carboxylique sont préférentiellement stœchiométriques.

La diamine aliphatique utilisée pour l'obtention de ce motif répétitif X.Y est une diamine aliphatique qui présente une chaine principale linéaire comprenant de 6 à 18 atomes de carbone.

Cette chaine principale linéaire peut, le cas échéant, comporter un ou plusieurs substituant(s) méthyle et/ou éthyle ; dans cette dernière configuration, on parle de "diamine aliphatique ramifiée". Dans le cas où la chaine principale ne comporte aucun substituant, la diamine aliphatique est dite "diamine aliphatique linéaire".

Qu'elle comporte ou non des substituants méthyle et/ou éthyle sur la chaine principale, la diamine aliphatique utilisée pour l'obtention de ce motif répétitif X.Y comprend de 6 à 18 atomes de carbone, notamment de 7 à 13 atomes de carbone.

Lorsque cette diamine est une diamine aliphatique linéaire, elle répond notamment à la formule H2N-(CH2)x-NH2 et peut être choisie par exemple parmi l'hexanediamine, l'heptanediamine, l'octanediamine, la nonanediamine, la décanediamine, l'undécanediamine, la dodécanediamine, la tridécanediamine, la tétradécanediamine, l'hexadécanediamine et l'octadécanediamine. Les diamines aliphatiques linéaires qui viennent d'être citées peuvent être toutes bio ressourcées au sens de la norme ASTM D6866.

Lorsque cette diamine est une diamine aliphatique ramifiée, elle peut notamment être la méthyl-2 pentanediamine, la 2-méthyl-1,8-octanediamine ou la triméthylène (2,2,4 ou 2,4,4) hexanediamine.

Le diacide carboxylique comprend de 6 à 18 atomes de carbone, notamment de 7 à 13 atomes de carbone.

Le diacide carboxylique aliphatique peut être choisi parmi les diacides carboxyliques aliphatiques, linéaires ou ramifiés.

Lorsque l'acide dicarboxylique est aliphatique et linéaire, il peut être choisi parmi l'acide adipique (6), l'acide heptanedioïque (7), l'acide octanedioïque (8), l'acide azélaïque (9), l'acide sébacique (10), l'acide undécanedioïque (11), l'acide dodécanedioïque (12), l'acide brassylique (13), l'acide tétradécanedioïque (14), l'acide hexadécanedioïque (16), l'acide octadécanedioïque (18), l'acide octadécènedioïque (18).

Avantageusement, ladite couche (1) comprend une composition comprenant au moins 49% en poids dudit au moins un polyamide aliphatique.

Avantageusement, ladite couche (1) comprend une composition comprenant au moins 50% en poids dudit au moins un polyamide aliphatique.

Avantageusement, ladite couche (1) comprend une composition comprenant au moins 60% en poids dudit au moins un polyamide aliphatique.

Avantageusement, ladite couche (1) comprend une composition comprenant au moins 70% en poids dudit au moins un polyamide aliphatique.

Avantageusement, ladite couche (1) comprend une composition comprenant au moins 80% en poids dudit au moins un polyamide aliphatique.

### Z : motif répétitif optionnel

Z peut être n"importe quel motif répétitif polyamide, qu'il soit aliphatique, cycloaliphatique, semi-aromatique ou aromatique.
Z peut être présent jusqu'à 30% en poids par rapport à au poids total W/Z.
Avantageusement, Z est présent jusqu'à 25% en poids.
Avantageusement, Z est présent jusqu'à 20% en poids.
Avantageusement, Z est présent jusqu'à 15% en poids.
Avantageusement, Z est présent jusqu'à 10% en poids.
Avantageusement, Z est présent jusqu'à 5% en poids.
Avantageusement, Z est égal à 0% en poids.

### S'agissant du plastifiant

Le plastifiant est notamment choisi parmi les dérivés de benzène sulfonamide, tels que le n-butyl benzène sulfonamide (BBSA) ; l'éthyl toluène sulfonamide ou le N-cyclohexyl toluène sulfonamide ; les esters d'acides hydroxy-benzoïques, tels que le parahydroxybenzoate d'éthyl-2-hexyle et le parahydroxybenzoate de décyl-2-hexyle ; les esters ou éthers du tétrahydrofurfuryl alcool, comme l'oligoéthylèneoxytétrahydrofurfurylalcool ; et les esters de l'acide citrique ou de l'acide hydroxy-malonique, tel que l'oligoéthylèneoxy malonate.

On ne sortirait pas du cadre de l'invention en utilisant un mélange de plastifiants.

Le plastifiant particulièrement préféré est le n-butyl benzène sulfonamide (BBSA).

Le plastifiant peut être introduit dans le polyamide pendant la polycondensation ou ultérieurement.

Le plastifiant utilisé dans la composition est en proportion massique de 0 à 2%.

Au-delà de 2%, la proportion de plastifiant est trop importante et le taux d'extractibles est alors trop important.

Dans encore un mode de réalisation, le plastifiant utilisé dans la composition est en proportion massique de 0,1 à 2%.

Le tube étant en partie annelée, cette géométrie de la structure tubulaire procure une certaine flexibilité et la dite composition de ladite couche (1) ne nécessite donc pas obligatoirement de présence de plastifiant.
Dans un mode de réalisation avantageux, ladite composition de ladite couche (1) est dépourvue de plastifiant.

Avantageusement, la structure tubulaire est annelée sur une proportion de 10 à plus de 90% de sa longueur de sa longueur et ladite composition de la couche (1) est dépourvue de plastifiant.

### S'agissant du modifiant choc

La structure tubulaire de l'invention se situe dans le réservoir et par conséquent, cette dernière est protégée des chocs et ne nécessite pas de protection particulière contre les chocs et donc le modifiant choc n'est pas indispensable.

Néanmoins, pour gagner en souplesse, la présence de modifiant choc peut être utile et/ou souhaitable.

Par l'expression « modifiant choc », il faut entendre un polymère à base polyoléfine présentant un module de flexion inférieur à 100 MPa mesuré selon la norme ISO 178 :2010 (23°C RH50) et de Tg inférieure à 0°C (mesurée selon la norme 11357-2 :2013 au niveau du point d'inflexion du thermogramme DSC), en particulier une polyoléfine.

Le modifiant choc peut aussi être un polymère bloc de type PEBA (polyéther-bloc-amide) ayant un module de flexion < 200 MPa.

La polyoléfine du modifiant choc peut être fonctionnalisée ou non fonctionnalisée ou être un mélange d'au moins une fonctionnalisée et/ou d'au moins une non fonctionnalisée. Notamment, une partie ou la totalité des polyoléfines porte une fonction choisie parmi les fonctions acide carboxylique, anhydride carboxylique et époxyde, et est en particulier choisie parmi un copolymère d'éthylène et de propylène à caractère élastomère (EPR), un copolymère éthylène-propylène-diène à caractère élastomère (EPDM) et un copolymère éthylène/(meth)acrylate d'alkyle, un copolymère éthylène-alcène supérieur, en particulier un copolymère étylène-octène, un terpolymère éthylène-acrylate d'alkyle-anhydride maléique. Avantageusement, le modifiant choc est choisi parmi le Fusabond^{®} N493, le Fusabond MF416D, un Lotader^{®}, en particulier le Lotader^{®} 4700 le Lotader^{®} 5500, le Lotader^{®} 7500 ou le Lotader^{®} 3410, l'Exellor^{®} VA1801 ou VA1803, l'Amplify^{®} GR216, le Tafmer^{®} MH5020, MH5040, MH7020, MH7010, ou un mélange de ceux-ci, dans ce cas ils sont dans un rapport allant de 0,1/99,9 à 99,9/0,1, préférentiellement 1/2 à 2/1 lorsqu'ils sont en mélange de deux.

A titre d'exemple, le modifiant choc est choisi parmi les mélanges suivants : le Fusabond^{®} N493/Lotader^{®}, en particulier le Fusabond^{®} N493/Lotader^{®} 5500 ou le Fusabond^{®} N493/Lotader^{®} 7500.

Le modifiant choc peut également être un PEBA (polyéther-bloc-amide).

La proportion de modifiant choc dans ladite composition de la dite couche (1) est présente de 0 à 20%.

Dans un mode de réalisation, le modifiant choc est présent de 3 à 20%.

Dans un autre mode de réalisation, le modifiant choc est présent de 10 à 18% en poids par rapport au poids total des constituants de la composition de la couche (1).

Dans encore un autre mode de réalisation, le modifiant choc est en proportion en poids de 0% par rapport au poids total des constituants de la composition de la couche (1) et est donc exclu de la composition de ladite couche (1).

### S'agissant de l'additif

Le ou les additifs d. sont choisis parmi le noir de carbone, le graphite, le graphène, des fibres de carbone, des nanotubes de carbone, en particulier le noir de carbone et les nanotubes de carbone, un antioxydant, un stabilisant à la chaleur, un absorbeur d'UV, un stabilisant à la lumière, un lubrifiant, une charge inorganique, un agent ignifugeant, un agent nucléant, un colorant, des fibres de renfort, une cire et leurs mélanges.

Les plastifiants et les modifiants chocs dans la présente demande sont exclus de la définition des additifs.

Ladite composition de la dite couche (1) peut comprendre au moins un additif de 0 à 35% en poids par rapport au poids total de la composition.

Ladite couche (1) peut donc être conductrice ou non en fonction de la présence de noir de carbone, de graphite, de graphène, de fibres de carbone ou de nanotubes de carbone Avantageusement, l'un de ces additifs est un antioxydant.

Cet antioxydant peut être un antioxydant organique ou plus généralement une combinaison d'antioxydants organiques, tel qu'un antioxydant primaire de type phénol (par exemple du type de celle de l'Irganox^{®} 245 ou 1098 ou 1010 de la société Ciba), un antioxydant secondaire de type phosphite, un antioxydant phénolique ou à base de phosphore. On peut également utiliser des antioxydants de type amine tel le Naugard^{®} 445 de la société Chemtura ou encore des antioxydants polyfonctionnels tel le Nylostab^{®} S-EED de la société Clariant.

Cet antioxydant peut également être un antioxydant minéral, tel qu'un antioxydant à base de cuivre. A titre d'exemple de tels antioxydants minéraux, on peut citer les halogénures et les acétates de cuivre, en particulier Cul/KI. Accessoirement, on peut considérer éventuellement d'autres métaux tel l'argent, mais ceux-ci sont connus pour être moins efficaces. Ces composés à base de cuivre sont typiquement associés à des halogénures de métaux alcalins, en particulier le potassium.

Le stabilisant à la lumière peut être un HALS, ce qui signifie Hindered Amine Light Stabiliser ou stabilisant lumière de type amine encombrée (par exemple le Tinuvin^{®} 770 de la société Ciba).

L'absorbeur d'UV est par exemple le Tinuvin^{®} 312 de la société Ciba.

Selon une première variante, l'additif est du noir de carbone, notamment en proportion de 5 à 32%, en particulier de 15 à 28% par rapport au poids total de ladite composition de la dite couche (I). Ledit additif qui est du noir de carbone peut optionnellement comprendre au moins un additif autre le noir de carbone, le graphite, le graphène, des fibres de carbone et des nanotubes de carbone en proportion de 0 à 5% en poids. La proportion de l'additif qui est du noir de carbone et optionnellement de l'additif autre par rapport correspond à d..

Selon une deuxième variante, l'additif est des nanotubes de carbone en proportion de 0,5 à 10%, notamment de 2 à 7%, en particulier de 4 à 5% en poids par rapport au poids total de la composition.

On ne sortirait pas du cadre de l'invention si dans ces variantes du noir de carbone était remplacé partiellement par des nanotubes de carbone ou vive et versa.

La somme a. + b. + c. + d. en poids représente 100% du poids total de la composition. Par conséquent, il ne peut y avoir d'autres constituants que a., b., c. et d. dans la composition.

Il est bien évident que quelles que soient les valeurs hautes et basses des différents constituants a., b., c. et d., le total fait 100%. En d'autres termes, même si l'addition de la valeur haute d'un des constituants a., b., c. et d. et des valeurs basses des autres constituants peut représenter plus de 100%, il est bien évident que l'homme du métier fera varier l'un ou plusieurs constituants a., b., c. et d. de manière à ce que le total des constituants ne dépasse pas 100% en poids.

Que la structure tubulaire soit constituée d'une seule couche ou comprenne d'autres couches, comme indiqué ci-dessus, elle est située au moins partiellement à l'intérieur du réservoir, ce qui signifie que plus de 90% de la longueur totale du tuyau est située dans le réservoir et par conséquent, ladite structure tubulaire n'est pas une structure de transport de carburant entre le réservoir et le moteur d'un véhicule et ce en raison du fait qu'elle peut être au moins partiellement immergée dans le réservoir, ce qui a pour conséquence lorsqu'elle est au moins partiellement immergée qu'aussi bien la couche interne de ladite structure tubulaire que la couche externe de ladite structure tubulaire sont en contact avec le carburant, et ce au moins partiellement pour la couche externe. Dans le mode de réalisation où la structure est monocouche, l'unique couche (1) est donc en contact avec le carburant aussi bien sur la face interne que sur la face externe, au moins partiellement pour cette dernière lorsque qu'elle est au moins partiellement immergée.

La structure tubulaire de l'invention n'est pas non plus une structure tubulaire présente dans le moteur.

Les polyamides ci-dessus définis dans leur généralités, qu'il s'agisse d'homopolyamides, de copolyamides et d'alliages peuvent également être distingués par leur nombre d'atomes de carbone par atome d'azote, sachant qu'il y a autant d'atomes d'azote que de groupes amides (-CO-NH-).

### Structure tubulaire avec un polyamide aliphatique étant au moins un polyamide noté C obtenu à partir de la polycondensation d'au moins un lactame en C₆ à C₁₈, ou d'au moins un acide aminocarboxylique en C₆ à C₁₈.

Dans un mode de réalisation, la structure tubulaire définie ci-dessus est caractérisée en ce que ledit au moins un polyamide aliphatique est au moins un polyamide noté C obtenu à partir de la polycondensation d'au moins un lactame en C₆ à C₁₈, préférentiellement en C₇ à C₁₃, ou d'au moins un acide aminocarboxylique en C₆ à C₁₈, préférentiellement en C₇ à C₁₃, et présentant un nombre moyen d'atomes de carbone par atome d'azote noté CC compris entre 9 et 18, avantageusement entre 10 et 18.

Dans toute la description, l'expression *« compris entre ... et ...* » inclut les bornes et à la même signification que l'expression « *compris de ...* à ... ».

Il est bien évident que pour obtenir un nombre moyen d'atomes de carbone par atome d'azote noté C_{C} compris entre 9 et 18 avec un polyamide noté C obtenu à partir de la polycondensation d'au moins un lactame en C7 ou C8, ou d'au moins un acide aminocarboxylique en C7 ou C8, ledit polyamide noté C devra être un copolyamide ou un mélange de polyamide dont le deuxième motif présente un nombre moyen d'atomes de carbone par atome d'azote noté C_{C} compris supérieur à 9 en fonction du prorata molaire dudit deuxième motif.

Avantageusement, ledit polyamide aliphatique est un seul polyamide noté C obtenu à partir de la polycondensation d'au moins un lactame en C₆ à C₁₈, préférentiellement en C₇ à C₁₃, ou d'au moins un acide aminocarboxylique en C₆ à C₁₈, préférentiellement en C₇ à C₁₃, et présentant un nombre moyen d'atomes de carbone par atome d'azote noté C_{C} compris entre 9 et 18, avantageusement entre 10 et 18.

Dans un autre mode de réalisation, ledit constituant a. de ladite composition comprend de plus un autre polyamide choisi parmi :
- au moins un polyamide noté A présentant un nombre moyen d'atomes de carbone par atome d'azote noté C_{A} compris entre 4 et 8,5, avantageusement entre 4 et 7 ;
- au moins un polyamide noté B présentant une température de fusion supérieure ou égale à 180°C et un nombre moyen d'atomes de carbone par atome d'azote noté C_{B} compris entre 7 et 10, avantageusement entre 7,5 et 9,5;

ou un mélange de ceux-ci,
la moyenne pondérée massique des enthalpies de fusion des polyamides étant supérieure à 25J/g (DSC),
le nombre moyen d'atomes de carbone par atome d'azote des polyamides A, B et C répondant en outre à l'inéquation stricte suivante : C_{A} < C_{B} < C_{C}.

Le polyamide noté A et le polyamide noté B, ledit polyamide noté B présentant une température de fusion supérieure ou égale à 180°C, sont des polyamides obtenus soit à partir de la polycondensation d'au moins un lactame, ou d'au moins un acide aminocarboxylique et présentant respectivement un nombre moyen d'atomes de carbone par atome d'azote noté CA compris entre 4 et 8,5, avantageusement entre 4 et 7, et un nombre moyen d'atomes de carbone par atome d'azote noté CB compris entre 7 et 10, avantageusement entre 7,5 et 9,5, mais peuvent être également un PA X'Y' obtenu à partir de la polycondensation d'une diamine aliphatique X' linéaire ou ramifiée, à condition de respecter le nombre moyen d'atomes de carbone par atome d'azote pour chacun des polyamides A et B.

Avantageusement, la différence entre les nombres moyens d'atomes de carbone par atome d'azote (C_{B}-C_{A}) et/ou (C_{C}-C_{B}) est comprise entre 1 et 4, et de préférence entre 2 et 3.

L'enthalpie de fusion et la température de fusion des polyamides est déterminée selon la norme ISO 11357-3 : 2013.

La composition de ladite couche (1) peut donc comprendre un polyamide noté C et un polyamide noté A, ou un polyamide noté C et un polyamide noté B, ou encore un polyamide noté C, un polyamide noté A et un polyamide noté B.

La proportion massique des différents polyamides dans les compostions ci-dessus est variable, ce qui signifie que l'un des polyamides noté A, B ou C est majoritaire par rapport à la somme C + A, C + B ou C + A + B.

Dans une première variante, ledit constituant a. de ladite composition comprend de plus au moins un polyamide noté A présentant un nombre moyen d'atomes de carbone par atome d'azote noté C_{A} compris entre 4 et 8,5, avantageusement entre 4 et 7.

Avantageusement, la température de fusion du polyamide A est supérieure ou égale à 210°C.

Dans une seconde variante, ledit constituant a. de ladite composition comprend de plus au moins un polyamide noté B présentant une température de fusion supérieure ou égale à 180°C et un nombre moyen d'atomes de carbone par atome d'azote noté C_{B} compris entre 7 et 10, avantageusement entre 7,5 et 9,5.

Avantageusement, la température de fusion du polyamide B est inférieure ou égale à 200°C.

Dans une troisième variante, ledit constituant a. de ladite composition comprend de plus au moins un polyamide noté A présentant un nombre moyen d'atomes de carbone par atome d'azote noté C_{A} compris entre 4 et 8,5, avantageusement entre 4 et 7 et au moins un polyamide noté B présentant une température de fusion supérieure ou égale à 180°C et un nombre moyen d'atomes de carbone par atome d'azote noté C_{B} compris entre 7 et 10, avantageusement entre 7,5 et 9,5.

Avantageusement, la température de fusion du polyamide A est supérieure ou égale à 210°C et/ou la température de fusion du polyamide B est inférieure ou égale à 200°C.

Avantageusement, ladite composition des trois variantes ci-dessus définies, comprend de 34 à 84% en poids de polyamide aliphatique C par rapport au poids total des polyamides présents au sein de ladite composition, de préférence entre 50 et 80%.

Plus avantageusement, ladite composition des trois variantes ci-dessus définies, comprend de 60 à 80% en poids de polyamide aliphatique C par rapport au poids total des polyamides présents au sein de ladite composition.

Plus avantageusement, ladite composition des trois variantes ci-dessus définies, comprend de 70 à 80% en poids de polyamide aliphatique C par rapport au poids total des polyamides présents au sein de ladite composition.

Lorsque le dit polyamide aliphatique de la structure tubulaire est au moins un polyamide noté C obtenu à partir de la polycondensation d'au moins un lactame en C₆ à C₁₈, préférentiellement en C₇ à C₁₃, ou d'au moins un acide aminocarboxylique en C₆ à C₁₈, préférentiellement en C₇ à C₁₃, alors ledit polyamide C est avantageusement choisi parmi le PA11 et le PA12, avantageusement le PA11.

Dans la première variante, ledit polyamide C est avantageusement choisi parmi le PA11 et le PA12, avantageusement le PA11 et le polyamide A est choisi parmi le PA6, PA46 et PA66.

Dans la deuxième variante, ledit polyamide C est avantageusement choisi parmi le PA11 et le PA12, avantageusement le PA11 et le polyamide B est choisi parmi le PA610, et le PA612.

Dans la troisième variante, ledit polyamide C est avantageusement choisi parmi le PA11 et le PA12, avantageusement le PA11, le polyamide B est choisi parmi le PA610, et le PA612 et le polyamide A est choisi parmi le PA6, PA46 et PA66.

Avantageusement, chacun des polyamides A, B, et C a une enthalpie de fusion supérieure à 25J/g (DSC).

Dans un mode deréalisation, ladite structure tubulaire est caractérisée en ce que W dans ledit polyamide aliphatique de formule W/Z est au moins un motif répétitif aliphatique XY qui est un polyamide noté B' présentant une température de fusion supérieure ou égale à 180°C et un nombre moyen d'atomes de carbone par atome d'azote noté CB' compris entre 7 et 10, avantageusement entre 7,5 et 9,5 ou un polyamide noté C' présentant un nombre moyen d'atomes de carbone par atome d'azote noté CC' compris entre 9 et 18, avantageusement entre 10 et 18.

Dans un autre mode de réalisation, la structure tubulaire définie ci-dessus est caractérisée en ce que W dans ledit au moins un polyamide aliphatique de formule W/Z est un motif répétitif aliphatique XY qui est un polyamide noté B' présentant une température de fusion supérieure ou égale à 180°C et un nombre moyen d'atomes de carbone par atome d'azote noté CB' compris entre 7 et 10, avantageusement entre 7,5 et 9,5 ou un polyamide noté C' présentant un nombre moyen d'atomes de carbone par atome d'azote noté CC' compris entre 9 et 18, avantageusement entre 10 et 18.

Les motifs répétitifs issus de la polycondensation de lactames et/ou d'acide aminocarboxylique sont donc exclus des polyamides notés B' ou notés C'.

Avantageusement, ledit polyamide aliphatique est un seul polyamide noté B' ou un seul polyamide noté C'.

Dans un mode de réalisation, ledit constituant a. de ladite composition constitué d'au moins un polyamide aliphatique noté B' ou noté C' comprend de plus un autre polyamide choisi parmi :
- au moins un polyamide noté A présentant un nombre moyen d'atomes de carbone par atome d'azote noté C_{A} compris entre 4 et 8,5, avantageusement entre 4 et 7 ;
- au moins un polyamide noté B" présentant une température de fusion supérieure ou égale à 180°C et un nombre moyen d'atomes de carbone par atome d'azote noté C_{B"} compris entre 7 et 10, avantageusement entre 7,5 et 9,5, lorsque ledit polyamide aliphatique est C',
- au moins un polyamide noté C" présentant un nombre moyen d'atomes de carbone par atome d'azote noté C_{C"} compris entre 9 et 18, avantageusement entre 10 et 18, lorsque ledit polyamide aliphatique est B';

ou un mélange de ceux-ci,
la moyenne pondérée massique des enthalpies de fusion des polyamides étant supérieure à 25J/g (DSC),
le nombre moyen d'atomes de carbone par atome d'azote des polyamides A, B', B", C'et C" répondant en outre à l'inéquation stricte suivante : C_{A} < C_{B'} ou C_{B"}< C_{C'} ou C_{C".}

Le polyamide noté A est un polyamide obtenu comme décrit ci-dessus, le polyamide noté B" est un polyamide obtenu comme décrit ci-dessus pour le polyamide B et le polyamide noté C" est un polyamide obtenu comme décrit ci-dessus pour le polyamide C, à condition de respecter nombre moyen d'atomes de carbone par atome d'azote pour chacun des polyamides A, B" et C".

Avantageusement, la différence entre les nombres moyens d'atomes de carbone par atome d'azote (C_{B'} - C_{A}) et/ou (C_{C'} - C_{B"}) et/ou (C_{C"}- C_{B"}) est comprise entre 1 et 4, et de préférence entre 2 et 3.

La composition de ladite couche (1) peut donc comprendre :
- un polyamide noté B' et un polyamide noté A,
- un polyamide noté B' et un polyamide noté C",
- un polyamide noté B', un polyamide noté A et un polyamide noté C",
- un polyamide noté C' et un polyamide noté A,
- un polyamide noté C' et un polyamide noté B"
- un polyamide noté C', un polyamide noté A et un polyamide noté B".

La proportion massique des différents polyamides dans les compositions ci-dessus est variable, ce qui signifie que l'un des polyamides noté A, B' ou C" est majoritaire par rapport au total des polyamides A + B' + C" ou que l'un des polyamides noté A, B" ou C' est majoritaire par rapport au total des polyamides A + B" + C' présents dans la composition.

Dans une première variante, ledit au moins un polyamide aliphatique noté B' comprend de plus au moins un polyamide noté A présentant un nombre moyen d'atomes de carbone par atome d'azote noté C_{A} compris entre 4 et 8,5, avantageusement entre 4 et 7.

Dans une seconde variante, ledit au moins un polyamide aliphatique noté B' comprend de plus au moins un polyamide noté C" présentant un nombre moyen d'atomes de carbone par atome d'azote noté C_{C"} compris entre 9 et 18, avantageusement entre 10 et 18.

Dans une troisième variante, ledit au moins un polyamide aliphatique noté B' comprend de plus au moins un polyamide noté A présentant un nombre moyen d'atomes de carbone par atome d'azote noté C_{A} compris entre 4 et 8,5, avantageusement entre 4 et 7 et au moins un polyamide noté C" présentant un nombre moyen d'atomes de carbone par atome d'azote noté C_{C"} compris entre 9 et 18, avantageusement entre 10 et 18.

Dans une quatrième variante, ledit au moins un polyamide aliphatique noté C' comprend de plus au moins un polyamide noté A présentant un nombre moyen d'atomes de carbone par atome d'azote noté C_{A} compris entre 4 et 8,5, avantageusement entre 4 et 7.

Dans une cinquième variante, ledit au moins un polyamide aliphatique noté C' comprend de plus au moins un polyamide noté B" présentant une température de fusion supérieure ou égale à 180°C et un nombre moyen d'atomes de carbone par atome d'azote noté C_{B'} compris entre 7 et 10, avantageusement entre 7,5 et 9,5.

Dans une sixième variante, ledit au moins un polyamide aliphatique noté C' comprend de plus au moins un polyamide noté A présentant un nombre moyen d'atomes de carbone par atome d'azote noté C_{A} compris entre 4 et 8,5, avantageusement entre 4 et 7 et au moins un polyamide noté B" présentant une température de fusion supérieure ou égale à 180°C et un nombre moyen d'atomes de carbone par atome d'azote noté C_{B"} compris entre 7 et 10, avantageusement entre 7,5 et 9,5.

Avantageusement, la température de fusion du polyamide A est supérieure ou égale à 210°C et/ou la température de fusion du polyamide C" est inférieure ou égale à 200°C et/ou la température du polyamide B" est supérieure ou égale à 180°C.

Avantageusement, ladite composition de trois des six variantes ci-dessus définies, comprend de 34 à 84% en poids de polyamide aliphatique B' par rapport au poids total des polyamides présents au sein de ladite composition, de préférence entre 50 et 80%.

Plus avantageusement, ladite composition de trois des six variantes ci-dessus définies, comprend de 60 à 80% en poids de polyamide aliphatique B' par rapport au poids total des polyamides présents au sein de ladite composition.

Plus avantageusement, ladite composition de trois des six variantes ci-dessus définies, comprend de 70 à 80% en poids de polyamide aliphatique B' par rapport au poids total des polyamides présents au sein de ladite composition.

Avantageusement, ladite composition de trois des six variantes ci-dessus définies, comprend de 34 à 84% en poids de polyamide aliphatique C' par rapport au poids total des polyamides présents au sein de ladite composition, de préférence entre 50 et 80%.

Plus avantageusement, ladite composition de trois des six variantes ci-dessus définies, comprend de 60 à 80% en poids de polyamide aliphatique C' par rapport au poids total des polyamides présents au sein de ladite composition.

Plus avantageusement, ladite composition de trois des six variantes ci-dessus définies, comprend de 70 à 80% en poids de polyamide aliphatique C' par rapport au poids total des polyamides présents au sein de ladite composition.

Lorsque le dit au moins un polyamide aliphatique de la structure tubulaire est un motif répétitif aliphatique qui est un polyamide noté B', alors ledit polyamide B' est avantageusement choisi parmi le PA610 et le PA612, avantageusement le PA610.

Lorsque le dit au moins un polyamide aliphatique de la structure tubulaire est un motif répétitif aliphatique qui est un polyamide noté C', alors ledit polyamide C' est avantageusement choisi parmi le PA1012, le PA618 et le PA1010.

Dans la première variante, ledit polyamide B' est avantageusement choisi parmi le PA610 et le PA612, avantageusement le PA610 et le polyamide A est choisi parmi le PA6, PA46 et PA66.

Dans la deuxième variante, ledit polyamide B' est avantageusement choisi parmi le PA610 et le PA612, avantageusement le PA610 et le polyamide C" est choisi parmi le PA11, PA12, PA1012, PA618 et PA1010.

Dans la troisième variante, ledit polyamide B' est avantageusement choisi parmi le PA610 et le PA612, avantageusement le PA610 et le polyamide A est choisi parmi le PA6, PA46 et PA66 et le polyamide C" est choisi parmi le PA11, PA12, PA1012, PA618 et PA1010.

Dans la quatrième variante, ledit polyamide C' est choisi parmi PA1012, PA618 et PA1010, et le polyamide A est choisi parmi le PA6, PA46 et PA66.

Dans la cinquième variante, ledit polyamide C' est choisi parmi PA1012, PA618 et PA1010, et le polyamide B" est avantageusement choisi parmi le PA610 et le PA612, avantageusement le PA610.

Dans la sixième variante, ledit polyamide C' est choisi parmi PA1012, PA618 et PA1010, le polyamide A est choisi parmi le PA6, PA46 et PA66, et le polyamide B" est avantageusement choisi parmi le PA610 et le PA612, avantageusement le PA610.

Avantageusement, chacun des polyamides A, B', B", C' et C" a une enthalpie de fusion supérieure à 25J/g (DSC).

Avantageusement, lorsque la structure est constituée d'une seule couche qui est la couche (1), la composition de ladite couche (1) est dépourvue d'additif choisi parmi le noir de carbone, le graphite, le graphène, les fibres de carbone et les nanotubes de carbone.

Dans ce mode de réalisation, la structure tubulaire est donc non conductrice et dépourvue de toute autre couche.

Toutes les caractéristiques des différents constituants a., b., c. et d. définies ci-dessus sont valables pour ce mode particulier de réalisation à l'exception des additifs choisis parmi le noir de carbone, le graphite, le graphène, les fibres de carbone et les nanotubes de carbone.

Avantageusement, lorsque la structure tubulaire est monocouche, l'épaisseur de ladite couche (1) est d'au moins 600µm.

Avantageusement, ladite structure tubulaire monocouche dépourvue d'additif choisi parmi le noir de carbone, le graphite, le graphène, les fibres de carbone et les nanotubes de carbone est également dépourvue de plastifiant.

### Structure tubulaire dans laquelle l'additif est au moins du noir de carbone

Dans un mode de réalisation, ladite structure tubulaire, ci-dessus définie, comprend un additif dans la couche (1) qui est au moins du noir de carbone.

D'autres additifs peuvent être présents dans ladite couche (1) mais ils ne sont alors pas conducteurs.

Ladite structure tubulaire peut être monocouche ou multicouche.

Avantageusement elle est multicouche.

Dans une première variante, ladite structure tubulaire ci-dessus définie, est caractérisée en ce que ladite composition de ladite couche (1) comprend :
a. de 39% à 95% en poids, en particulier de 41% à 85% en poids d'au moins un polyamide aliphatique,
b. de 0% à 2% d'un plastifiant,
c. de 0% à 20% en poids d'au moins un modifiant choc,
d. de 5% à 32%, en particulier de 15 à 28% en poids d'un additif qui est le noir de carbone, et
   de 0 à 5% en poids d'au moins un additif autre que le noir de carbone, le
   graphite, le graphène, des fibres de carbone et des nanotubes de carbone, la somme a. + b. + c. + d. étant égale à 100%.

Les additifs, plastifiants, modifiants choc sont tels que définis ci-dessus.

Dans un mode de réalisation, ladite structure tubulaire ci-dessus définie, est caractérisée en ce que ladite composition de ladite couche (1) est constituée :
a. de 39% à 95% en poids, en particulier de 41% à 85% en poids d'au moins un polyamide aliphatique,
b. de 0% à 2% d'un plastifiant,
c. de 0% à 20% en poids d'au moins un modifiant choc,
d. de 5% à 32%, en particulier de 15 à 28% en poids d'un additif qui est le noir de carbone, et
   de 0 à 5% en poids d'au moins un additif autre que le noir de carbone, le
   graphite, le graphène, des fibres de carbone et des nanotubes de carbone, la somme a. + b. + c. + d. étant égale à 100% du poids total de la composition.

Dans une seconde variante, ladite structure tubulaire ci-dessus définie, est caractérisée en ce que ladite composition de ladite couche (1) comprend :
a. de 39% à 85% en poids, en particulier de 41% à 75% en poids d'au moins un polyamide aliphatique,
b. de 0% à 2% d'un plastifiant,
c. de 10% à 18% d'au moins un modifiant choc,
d. de 5% à 32%, en particulier de 15 à 28% en poids d'un additif qui est le noir de carbone et
   de 0 à 5% en poids d'au moins un additif autre que le noir de carbone, le
   graphite, le graphène, des fibres de carbone et des nanotubes de carbone, la somme a. + b. + c. + d. étant égale à 100%.

Dans un mode de réalisation, ladite structure tubulaire ci-dessus définie, est caractérisée en ce que ladite composition de ladite couche (1) est constituée de :
a. de 39% à 85% en poids, en particulier de 41% à 75% en poids d'au moins un polyamide aliphatique,
b. de 0% à 2% d'un plastifiant,
c. de 10% à 18% d'au moins un modifiant choc,
d. de 5% à 32%, en particulier de 15 à 28% en poids d'un additif qui est le noir de carbone et
   de 0 à 5% en poids d'au moins un additif autre que le noir de carbone, le
   graphite, le graphène, des fibres de carbone et des nanotubes de carbone, la somme a. + b. + c. + d. étant égale à 100% du poids total de la composition.

### Structure tubulaire dans laquelle l'additif est au moins des nanotubes de carbone

Dans un mode de réalisation, ladite structure tubulaire, ci-dessus définie, comprend un additif dans la couche (1) qui est au moins des nanotubes de carbone.

D'autres additifs peuvent être présents dans ladite couche (1) mais ils ne sont alors pas conducteurs.

Ladite structure tubulaire peut être monocouche ou multicouche.

Dans une première variante, ladite structure tubulaire ci-dessus définie, est caractérisée en ce que ladite composition de ladite couche (1) comprend :
a. de 70% à 99,5% en poids, notamment de 80% à 98% en poids, en particulier de 80% à 96% en poids d'au moins un polyamide aliphatique,
b. de 0% à 2% d'un plastifiant,
c. de 0% à 20% d'au moins un modifiant choc,
d. de 0,5 à 10%, préférentiellement de 2% à 7%, en particulier de 4 à 5% en poids d'un additif qui est des nanotubes de carbone, et
de 0 à 19%, préférentiellement de 0 à 22%, en particulier de 0 à 24% en poids d'au moins un additif autre que le noir de carbone, le graphite, le graphène, des fibres de carbone et des nanotubes de carbone,
la somme a. + b. + c. + d. étant égale à 100%.

Dans un mode de réalisation, ladite structure tubulaire ci-dessus définie, est caractérisée en ce que ladite composition de ladite couche (1) est constituée de :
a. de 70% à 99,5% en poids, notamment de 80% à 98% en poids, en particulier de 80% à 96% en poids d'au moins un polyamide aliphatique,
b. de 0% à 2% d'un plastifiant,
c. de 0% à 20% d'au moins un modifiant choc,
d. de 0,5 à 10%, préférentiellement de 2% à 7%, en particulier de 4 à 5% en poids d'un additif qui est des nanotubes de carbone, et
de 0 à 19%, préférentiellement de 0 à 22%, en particulier de 0 à 24% en poids d'au moins un additif autre que le noir de carbone, le graphite, le graphène, des fibres de carbone et des nanotubes de carbone,
la somme a. + b. + c. + d. étant égale à 100% du poids total de la composition.

Dans une seconde variante, ladite structure tubulaire ci-dessus définie, est caractérisée en ce que ladite composition de ladite couche (1) comprend
a. de 70% à 89,5% en poids, notamment de 80% à 88% en poids, en particulier de 80% à 86% en poids d'au moins un polyamide aliphatique,
b. de 0% à 2% d'un plastifiant,
c. de 10% à 18% d'au moins un modifiant choc,
d. de 0,5 à 10%, préférentiellement de 2% à 7%, en particulier de 4 à 5% en poids d'un additif qui est des nanotubes de carbone, et
de 0 à 19%, préférentiellement de 0 à 22%, en particulier de 0 à 24% en poids d'au moins un additif autre que le noir de carbone, le graphite, le graphène, des fibres de carbone et des nanotubes de carbone,
la somme a. + b. + c. + d. étant égale à 100%.

Dans un mode de réalisation, ladite structure tubulaire ci-dessus définie, est caractérisée en ce que ladite composition de ladite couche (1) est constituée de :
a. de 70% à 89,5% en poids, notamment de 80% à 88% en poids, en particulier de 80% à 86% en poids d'au moins un polyamide aliphatique,
b. de 0% à 2% d'un plastifiant,
c. de 10% à 18% d'au moins un modifiant choc,
d. de 0,5 à 10%, préférentiellement de 2% à 7%, en particulier de 4 à 5% en poids d'un additif qui est des nanotubes de carbone, et
de 0 à 19%, préférentiellement de 0 à 22%, en particulier de 0 à 24% en poids d'au moins un additif autre que le noir de carbone, le graphite, le graphène, des fibres de carbone et des nanotubes de carbone,
la somme a. + b. + c. + d. étant égale à 100% du poids total de la composition.

Avantageusement, la couche (1) de l'une des structures tubulaires ci-dessus définies est dépourvue de plastifiant.

### Structure tubulaire comprenant au moins une couche (1) et au moins une couche (2)

Dans un autre mode de réalisation, la structure tubulaire ci-dessus définie est caractérisée en ce qu'elle comprend au moins une deuxième couche (2) conductrice ou non, en particulier conductrice, ladite couche (1) étant située au-dessus ou en dessous de la dite couche (2).

L'expression « au-dessus » signifie à l'extérieur de la structure tubulaire, ladite couche (1) étant donc la couche externe et ladite couche (2) étant la couche interne.

L'expression « en-dessous » signifie à l'intérieur de la structure tubulaire, ladite couche (1) étant donc la couche interne et ladite couche (2) étant la couche externe.

La structure tubulaire correspond alors à une structure multicouche (MLT).

Avantageusement, ladite couche (1) est située au-dessus de ladite couche (2).

Avantageusement, l'épaisseur de la couche (1) dans la structure MLT est comprise d'environ 600 µm à environ 950 µm.

Avantageusement, l'épaisseur de la dite couche (2) dans la structure MLT représente moins de 25% de l'épaisseur totale de la MLT.

Avantageusement, lorsque la dite deuxième couche (2) est conductrice, son épaisseur est comprise de 50 à 200 µm.

Avantageusement, ladite structure tubulaire comprenant au moins une deuxième couche (2), est caractérisée en ce que ladite deuxième couche (2) comprend au moins un polyamide aliphatique ou des matériaux fluorés tel que le PVDF ou des matériaux fluorés fonctionnalisés tels que le copolymère d'éthylène et de tétrafluoroéthylène (ETFE) fonctionnalisé, le copolymère d'éthylène, de tétrafluoroéthylène et d'hexafluoro-propylène (EFEP) fonctionnalisé, un copolymère de tetrafluoroethylene-perfluoro(alkylvinylether)-chlorotrifluoroethylene (CPT).

Toutes les caractéristiques techniques détaillées ci-dessus pour la couche (1) de la structure tubulaire sont valables pour ce mode de réalisation dans lequel au moins une couche (1) et au moins une couche (2) sont présentes.

Ladite au moins une deuxième couche (2) est conductrice ou non, ce qui signifie qu'elle peut contenir des additifs choisis parmi le noir de carbone, le graphite, le graphène, des fibres de carbone et des nanotubes de carbone et la dite couche (1) est conductrice ou non.

Dans une première variante, ladite au moins une deuxième couche (2) est dépourvue de plastifiant.

Dans un seconde variante, ladite au moins une deuxième couche (2) est conductrice et comprend de 0,5 à 10%, préférentiellement de 2% à 7%, en particulier de 4 à 5% en poids d'un additif qui est des nanotubes de carbone, ou de 5% à 24%, en particulier de 15 à 24% en poids d'un additif qui est le noir de carbone, par rapport au poids total de la composition de ladite couche (2).

Dans un troisième variante, ladite au moins une deuxième couche (2) est conductrice et comprend de 0,5 à 10%, préférentiellement de 2% à 7%, en particulier de 4 à 5% en poids d'un additif qui est des nanotubes de carbone, ou de 5% à 24%, en particulier de 15 à 24% en poids d'un additif qui est le noir de carbone, par rapport au poids total de la composition de ladite couche (2) et est dépourvue de plastifiant

Dans un quatrième variante, ladite au moins une deuxième couche (2) est conductrice et comprend de 0,5 à 10%, préférentiellement de 2% à 7%, en particulier de 4 à 5% en poids d'un additif qui est des nanotubes de carbone, ou de 5% à 24%, en particulier de 15 à 24% en poids d'un additif qui est le noir de carbone, par rapport au poids total de la composition de ladite couche (2) et ladite couche (1) est non conductrice.

Dans un cinquième variante, ladite au moins une deuxième couche (2) est conductrice et comprend de 0,5 à 10%, préférentiellement de 2% à 7%, en particulier de 4 à 5% en poids d'un additif qui est des nanotubes de carbone, ou de 5% à 24%, en particulier de 15 à 24% en poids d'un additif qui est le noir de carbone, par rapport au poids total de la composition de ladite couche (2), ladite couche (2) étant dépourvue de plastifiant et ladite couche (1) est non conductrice.

Dans un sixième variante, ladite au moins une deuxième couche (2) est conductrice et comprend de 0,5 à 10%, préférentiellement de 2% à 7%, en particulier de 4 à 5% en poids d'un additif qui est des nanotubes de carbone, ou de 5% à 24%, en particulier de 15 à 24% en poids d'un additif qui est le noir de carbone, par rapport au poids total de la composition de ladite couche (2), ladite couche (2) étant dépourvue de plastifiant et ladite couche (1) est non conductrice et la dite couche (1) est dépourvue de plastifiant.

Dans un autre mode de réalisation, la structure tubulaire ci-dessus définie est caractérisée en ce qu'elle comprend deux couches (2) conductrices ou non, en particulier conductrices, ladite couche (1) étant située entre les deux dites couches (2).

L'expression « couche barrière » signifie une couche très peu perméable aux carburants, notamment aux essences alcoolisées et qui par conséquent ne laisse que très peu passer le carburant, notamment les essences alcoolisées dans l'atmosphère.

En particulier, l'expression « couche barrière » signifie que la proportion de carburant, en particulier d'essence alcoolisée qui passe dans l'atmosphère est inférieure à 20 g.mm/m².jour telle que déterminée avec un carburant CE 10 à 60°C.

Les mesures de perméabilité à un carburant, notamment aux essences sont déterminées à 60°C selon une méthode gravimétrique avec le CE10 : isooctane/toluène/éthanol = 45/45/10 vol.% et le CE85 : isooctane/toluène/éthanol = 7,5/7,5/85 vol.% sur des plaques constituées d'un matériau polymère. La perméabilité instantanée est nulle pendant la période d'induction, puis elle augmente progressivement jusqu'à une valeur à l'équilibre qui correspond à la valeur de perméabilité en régime permanent. Cette valeur obtenue en régime permanent est considérée comme étant la perméabilité du matériau.

Cette propriété barrière est indispensable pour des tuyaux en contact avec l'atmosphère.

Dans le cas des structures tubulaires de l'invention, celle-ci étant immergée dans le carburant, une couche barrière n'est pas nécessaire. En conséquence, avantageusement,

Dans une variante, la structure tubulaire ci-dessus définie comprenant au moins une deuxième couche (2) est dépourvue de couche barrière et la structure tubulaire n'est alors constituée que de polyamides aliphatiques

Ledit polyamide aliphatique de la couche (2) est tel que défini ci-dessus et peut comprendre les mêmes additifs, modifiant choc, plastifiant que le polyamide de la couche (1) et ce dans des gammes de proportions identiques à celles de la couche (1).

Ledit matériau fluoré peut comprendre des additifs semblables à ceux du polyamide de la couche (1) et ce dans des gammes de proportions identiques à celles de la couche (1). Avantageusement, ladite deuxième couche (2) comprend une composition comprenant au moins un polyamide aliphatique, tel que défini pour ladite couche (1).

Dans un autre mode de réalisation, la structure tubulaire ci-dessus définie et comprenant au moins une deuxième couche (2) comprend également une troisième couche (2'), identique ou différente de la deuxième couche (2).

Avantageusement, ladite couche (2') comprend une composition comprenant un polyamide tel que défini pour ladite couche (2).

Avantageusement, lesdites couches (2) et (2') sont conductrices et la couche (1) est non conductrice.
Avantageusement, lorsque la structure tubulaire comprend au moins une couche (1) et au moins une couche (2), l'épaisseur de ladite couche (1) est de 60% à 95% de l'épaisseur totale du tube.

Selon un autre aspect, la présente invention concerne l'utilisation d'une structure tubulaire telle que définie ci-dessus, pour le transport de carburants dans le réservoir, en particulier le transport de l'essence dans le réservoir.

Toutes les caractéristiques définies ci-dessus pour la structure tubulaire sont valables pour cette utilisation.

Selon un autre aspect, la présente invention concerne l'utilisation d'une structure tubulaire telle que définie ci-dessus, pour satisfaire un test d'extractibles, ledit test consistant notamment à remplir ladite structure tubulaire multicouche MLT d'essence alcoolisée type FAM-B et à chauffer l'ensemble à 60°C pendant 96 heures, puis à le vider en le filtrant dans un bécher, puis à laisser le filtrat du bécher s'évaporer à température ambiante pour enfin peser ce résidu dont la proportion doit être inférieure ou égale à environ 10g/m² de surface interne de tube, de préférence inférieure ou égale à environ 6g/m².

Selon un autre aspect, la présente divulgation concerne un procédé de mesure des extractibles d'une structure tubulaire, telle que définie ci-dessus, comprenant les étapes suivantes :
1) remplissage de ladite structure tubulaire d'essence alcoolisée type FAM-B,
2) chauffage de ladite structure tubulaire immergée dans ladite essence l'ensemble à 60°C pendant 96 heures,
3) vidage avec filtration simultanée dans un bécher,
4) évaporation du filtrat du bécher à température ambiante
5) pesée du résidu après évaporation dont la proportion doit être inférieure ou égale à environ 6 g/m2 de surface interne de tube,

### EXEMPLES

L'invention va maintenant être décrite plus en détail à l'aide des exemples suivants qui ne sont pas limitatifs.

Les structures suivantes ont été ont été préparées par extrusion :
Les tubes multicouches sont réalisés par coextrusion. On utilise une ligne industrielle d'extrusion multicouche McNeil, équipée de 5 extrudeuses, connectées à une tête d'extrusion multicouche à mandrins spiralés.

Les vis utilisées sont des monovis d'extrusion ayant des profils de vis adaptés aux polyamides. En plus, des 5 extrudeuses et de la tête d'extrusion multicouche, la ligne d'extrusion comporte :
- un ensemble filière-poinçon, situé en bout de tête de coextrusion ; le diamètre intérieur de la filière et le diamètre extérieur du poinçon sont choisis en fonction de la structure à réaliser et des matériaux qui la composent, ainsi que des dimensions du tube et de la vitesse de ligne ;
- un bac à vide avec un niveau de dépression réglable. Dans ce bac circule de l'eau maintenue à 20°C en général, dans laquelle est plongé un calibre permettant de conformer le tube dans ses dimensions finales. Le diamètre du calibre est adapté aux dimensions du tube à réaliser, typiquement de 8,5 à 10 mm pour un tube de diamètre externe de 8 mm et d'épaisseur de 1 mm ;
- une succession de bacs de refroidissement dans lesquels de l'eau est maintenue vers 20°C, permettant de refroidir le tube le long de parcours de la tête au banc de tirage ;
- un mesureur de diamètre ;
- un banc de tirage.

La configuration à 5 extrudeuses est utilisée pour réaliser les tubes allant de 2 couches à 5 couches. Dans le cas des structures dont le nombre de couches est inférieur à 5, plusieurs extrudeuses sont alors alimentées avec la même matière.

Dans le cas des structures comportant 6 couches, une extrudeuse supplémentaire est connectée et un mandrin spiralé est ajouté à la tête existante, en vue de réaliser la couche interne, en contact avec le fluide.

Avant les essais, afin d'assurer les meilleures propriétés au tube et une bonne qualité d'extrusion, on vérifie que les matières extrudées aient un taux d'humidité résiduel avant extrusion inférieur à 0.08%. Dans le cas contraire, on procède à une étape supplémentaire de séchage de la matière avant les essais, généralement dans un sécheur sous vide, pendant 1 nuit à 80°C.

Les tubes, qui répondent aux caractéristiques décrites dans la présente demande de brevet, ont été prélevés, après stabilisation des paramètres d'extrusion, les dimensions du tubes visées n'évoluant plus dans le temps. Le diamètre est contrôlé par un mesureur de diamètre laser installé en bout de ligne.

Généralement, la vitesse de ligne est typiquement de 20m/min. Elle varie généralement de 5 à 100m/min.

La vitesse de vis des extrudeuses dépend de l'épaisseur de la couche et du diamètre de la vis comme cela est connu de l'homme de l'art.
De manière générale, les température des extrudeuses et des outillages (tête et raccord) doivent être réglées de sorte à être suffisamment supérieures à la température de fusion des compositions considérées, de façon à ce qu'elles demeurent à l'état fondu, évitant ainsi qu'elles se solidifient et bloquent la machine.

Les structures tubulaires ont été testées sur différents paramètres (Tableau I).

Toutes les épaisseurs de couches sont exprimées en µm.

La quantité d'extractibles, les propriétés d'éclatement et de souplesse ont été déterminées.

| Exemples et contre exemples | Extractibles (3) | Eclatement (1) | Souplesse (2) |
|---|---|---|---|
| Contre-exemple c1: PA12-TL | >50 | + | +++++ |
| monocouche d'épaisseur 1000µm | | | |
| Contre-exemple c2: PA11-TL | >40 | ++ | ++++++ |
| monocouche d'épaisseur 1000µm | | | |
| Contre-exemple c3: PA610-TL | >40 | ++++ | ++++ |
| monocouche d'épaisseur 1000µm | | | |
| Contre-exemple c4: PA612-TL | >40 | +++ | ++++ |
| monocouche d'épaisseur 1000µm | | | |
| Contre-exemple c5 (multicouche): PA12-TL//PA612-TL//PA12-TL | >40 | +++ | +++++ |
| épaisseurs : 100//800/100µm | | | |
| Exemple 1 : PA11-NoPlast | <4 | ++ | +++ |
| monocouche d'épaisseur 1000µm | | | |
| Exemple 2 : PA610-NoPlast | <4 | ++++ | ++ |
| monocouche d'épaisseur 1000µm | | | |
| Exemple 3 : PA612-NoPlast | <4 | +++ | ++ |
| monocouche d'épaisseur 1000µm | | | |
| Exemple 4 : PA612-NoPlast-B | <4 | ++++ | + |
| monocouche d'épaisseur 1000µm | | | |
| Exemple 5 (multicouche): PA12-NoPlast//PA612-NoPlast | <5 | +++ | ++ |
| épaisseurs : 100//900µm | | | |
| Exemple 6 (multicouche): PA12-NoPlast// PA612-NoPlast// PA12-NoPlast | <5 | +++ | +++ |
| épaisseurs : 100//800//100µm | | | |
| Exemple 7 (multicouche): PA11-NoPlast// PA612-NoPlast// PA11-NoPlast | <4 | +++ | +++ |
| épaisseurs : 100//800//100µm | | | |
| Exemple 8 (multicouche): PA11-NoPlast// PA610-NoPlast// PA11-NoPlast | <4 | ++++ | +++ |
| épaisseurs : 100//800//100µm | | | |
| Exemple 9 (multicouche): PA11-NoPlast// PA610-NoPlast// PA11cond -NoPlast | <4 | ++++ | ++ |
| épaisseurs : 100//800//100µm | | | |
| Exemple 10 (multicouche): EFEPc//PA610-NoPlast// EFEPc | <2 | ++++ | ++ |
| épaisseurs : 100//800//100µm | | | |
| Exemple 11 (multicouche): EFEPc//PA11-NoPlast// EFEPc | <2 | ++ | ++ |
| épaisseurs : 100//800//100µm | | | |
| Exemple 12 (multicouche): PA12-NoPlast// Liant-NoPlast//PA6-NoPlast | <5 | ++++ | ++ |
| épaisseurs : 100//100//800µm | | | |
| Exemple 13 (multicouche): PA12-NoPlast//Liant-NoPlast//PA6-NoPlast//Liant-NoPlast// PA12-NoPlast | <5 | +++ | +++ |
| épaisseurs : 100//100//600//100//100µm | | | |
| Exemple 14 (multicouche): | <6 | ++++ | +++ |
| PA11-TL// PA610-NoPlast | | | |
| épaisseurs : 100//900µm | | | |
| Exemple 15 : PA11-P | <9 | ++ | +++++ |
| monocouche d'épaisseur 1000µm | | | |
| | | | |

| | | | |
|---|---|---|---|
| (1) Eclatement est l'éclatement (selon la norme DIN 53758) après au moins 96h avec de la bio-essence FAM-B à l'intérieur, on cherche donc une valeur suffisamment haute pour tenir la pression. Plus le nombre de "+" est élevé, meilleur est l'éclatement. (2) Souplesse et le module de flexion (selon la norme ISO 178) sur le tube à l'état conditionné à 23°C en RH50. Plus le module est faible, plus la souplesse est élevée ce qui est favorable pour le montage du tube. Plus le nombre de "+" est élevé, plus favorable est la souplesse. (3) Extractibles. ce test consistant en un tube rempli d'essence alcoolisée type FAM-B à 60°C, durant 96 heures, puis vidé et filtré dans un bécher qu'on laisse ensuite évaporer et dont on pèse le résidu, ce dernier devant être préférentiellement inférieur ou égal 6g/m2 (de surface interne de tube). L'essence alcoolisée FAM B est décrite dans la norme DIN 51604-1 :1982, DIN 51604-2 :1984 et DIN 51604-3 :1984. Succinctement, de l'essence alcoolisée FAM A est tout d'abord préparée avec un mélange de 50% de Toluène, 30% d'isooctane, 15% de di-isobutylène et 5% d'éthanol puis FAM B | | | |

### Compositions

PA12-TL : désigne une composition à base de polyamide 12, contenant 6% de plastifiant et 6% de EPR1, et de 1,2% de stabilisants organiques. La température de fusion de cette composition est de 175°C.
PA11-TL désigne une composition à base de polyamide 11, contenant 5% de plastifiant, 6% de modifiant choc type éthylène/acrylate d'éthyle/anhydride en rapport massique 68,5/30/1,5 (MFI 6 à 190°C sous 2,16 kg), et de 1.2% de stabilisants organiques. La température de fusion de cette composition est de 185°C.
PA12-NoPlast = PA12-TL sans le plastifiant (ce dernier est remplacé par du PA12)
PA11-NoPlast = PA11-TL sans le plastifiant (ce dernier est remplacé par du PA11)
PA610-TL = PA610 + 12% modifiant choc EPR1 + stabilisant organique + 10% plastifiant
PA610-NoPlast = PA610-TL sans le plastifiant (ce dernier est remplacé par du PA610)
PA612-TL = PA612 + 12% modifiant choc EPR1 + stabilisant organique + 9%plastifiant
PA612-NoPlast = PA612-TL sans le plastifiant (ce dernier est remplacé par du PA612)
PA612-NoPlast-B = PA612-TL sans le plastifiant ni EPR1 (ceux-ci sont remplacés par du PA612)
PA11cond-noplast = PA11 de Mn 15000 + 9%EPR1 + 26% de noir de carbone type Ensaco 250G
PA6-NoPlast = PA6 + 12% modifiant choc EPR1 + stabilisant organique
Liant-NoPlast = Composition à base de 48.8% PA612 (tel que défini par ailleurs), de 30% de PA6 (tel que défini par ailleurs), et de 20% de modifiant choc type EPR1, et de 1,2% de stabilisants organiques.
EFEPc = EFEP fonctionnalisé et conducteur type Neoflon RP5000AS de Daikin
PA11-P = désigne une composition à base de polyamide 11, contenant 1% de plastifiant, 6% de modifiant choc type éthylène/acrylate d'éthyle/anhydride en rapport massique 68,5/30/1,5 (MFI 6 à 190°C sous 2.16 kg), et de 1,2% de stabilisants organiques. La température de fusion de cette composition est de 188°C.

### Constituants des compositions :

- PA12 : Polyamide 12 de Mn (masse moléculaire en nombre) 35000. La température de fusion est de 178°C, son enthalpie de fusion est 54kJ/m2
- PA11 : Polyamide 11 de Mn (masse moléculaire en nombre) 29000. La température de fusion est de 190°C, son enthalpie de fusion est 56kJ/m2
- PA610 : Polyamide 6.10 de Mn (masse moléculaire en nombre) 30000. La température de fusion est de 223°C, son enthalpie de fusion est 61kJ/m2
- PA612 : Polyamide 6.12 de Mn (masse moléculaire en nombre) 29000. La température de fusion est de 218°C, son enthalpie de fusion est 67kJ/m2
- PA6 : Polyamide 6 de Mn (masse moléculaire en nombre) 28000. La température de fusion est de 220°C, son enthalpie de fusion est 68kJ/m2
- EPR1 : Désigne un EPR fonctionnalisé par un groupe réactif fonction anhydride (à 0.5-1% en masse), de MFI 9 (à 230°C, sous) 10kg, de type Exxellor^{®} VA1801 de la société Exxon.
- Stabilisant organique = 1.2% de stabilisants organiques constitués de 0.8% de phénol (Lowinox^{®} 44B25 de la société Great Lakes), de 0.2% de phosphite (Irgafos^{®} 168 de la société Ciba, de 0.2% d'anti-UV (Tinuvin^{®} 312 de la société Ciba).
- Plastifiant = BBSA (benzyl butyl sulfonamide)

## Revendications

1. Structure tubulaire flexible en partie annelée destinée à être placée au moins partiellement à l'intérieur du réservoir de carburant, en particulier d'essence ou de diesel, notamment d'essence, d'un véhicule, ladite structure pouvant être au moins partiellement immergée dans ledit réservoir et destinée au transport dudit carburant dans ledit réservoir,
ladite structure tubulaire comprenant au moins une couche (1) constituée d'une composition constituée de:
a. de 39% à 100% en poids, en particulier de 41% à 100% en poids d'au moins un polyamide aliphatique de formule W/Z dans laquelle :
W est un motif répétitif aliphatique obtenu à partir de la polycondensation d'au moins un lactame en C₆ à C₁₈, préférentiellement en C₇ à C₁₃, ou d'au moins un acide aminocarboxylique en C₆ à C₁₈, préférentiellement en C₇ à C₁₃, ou est un motif répétitif aliphatique XY présentant un nombre moyen d'atomes de carbone par atome d'azote noté compris de 6 à 18, préférentiellement de 7 à 13, obtenu à partir de la polycondensation :
- d'au moins une diamine X en C₆ à C₁₈, ladite diamine étant choisie parmi une diamine aliphatique linéaire ou ramifiée ou un mélange de celles-ci, et
- d'au moins un diacide carboxylique aliphatique Y en C₆ à C₁₈,
Z est au moins un motif répétitif polyamide optionnel, Z pouvant être présent jusqu'à 30% en poids par rapport au poids total W/Z, préférentiellement jusqu'à 15% en poids par rapport au poids total W/Z,
b. de 0 à 2% en poids d'au moins un plastifiant,
c. de 0% à 20% d'au moins un modifiant choc,
d. de 0% à 37% en poids d'au moins un additif,
la somme a. + b. + c. + d. étant égale à 100%,
à l'exclusion d'une structure de transport de carburant allant du réservoir jusqu'au moteur du véhicule.

2. Structure tubulaire selon la revendication 1, **caractérisée en ce que** ledit au moins un polyamide aliphatique est au moins un polyamide noté C obtenu à partir de la polycondensation d'au moins un lactame en C₆ à C₁₈, préférentiellement en C₇ à C₁₃, ou d'au moins un acide aminocarboxylique en C₆ à C₁₈, préférentiellement en C₇ à C₁₃, et présentant un nombre moyen d'atomes de carbone par atome d'azote noté C_{C} compris entre 9 et 18, avantageusement entre 10 et 18.

3. Structure tubulaire selon la revendication 2, **caractérisée en ce que** ledit constituant a. de ladite composition comprend de plus un autre polyamide choisi parmi :
- au moins un polyamide noté A présentant un nombre moyen d'atomes de carbone par atome d'azote noté C_{A} compris entre 4 et 8,5, avantageusement entre 4 et 7 ;
- au moins un polyamide noté B présentant une température de fusion supérieure ou égale à 180°C et un nombre moyen d'atomes de carbone par atome d'azote noté C_{B} compris entre 7 et 10, avantageusement entre 7,5 et 9,5;
ou un mélange de ceux-ci,
la moyenne pondérée massique des enthalpies de fusion des polyamides étant supérieure à 25J/g (DSC),
le nombre moyen d'atomes de carbone par atome d'azote des polyamides A, B et C répondant en outre à l'inéquation stricte suivante : C_{A} < C_{B} < C_{C}.

4. Structure tubulaire selon la revendication 2 ou 3, **caractérisée en ce que** la composition comprend de 34 à 84% en poids de polyamide aliphatique C par rapport au poids total des polyamides présents au sein de ladite composition, de préférence entre 50 et 80%.

5. Structure tubulaire selon l'une des revendications 3 ou 4, **caractérisée en ce que** le polyamide A est choisi parmi le PA 6, le PA 46 et le PA 66, le polyamide B est choisi parmi le PA 610, le PA 612, de préférence le PA 610 et le polyamide C est choisi parmi le PA 11, le PA 12.

6. Structure tubulaire selon la revendication 1, **caractérisée en ce que** W dans ledit au moins un polyamide aliphatique de formule W/Z est un motif répétitif aliphatique XY qui est un polyamide noté B' présentant une température de fusion supérieure ou égale à 180°C et un nombre moyen d'atomes de carbone par atome d'azote noté C_{B'} compris entre 7 et 10, avantageusement entre 7,5 et 9,5 ou un polyamide noté C' présentant un nombre moyen d'atomes de carbone par atome d'azote noté C_{C'} compris entre 9 et 18, avantageusement entre 10 et 18.

7. Structure tubulaire selon la revendication 6, **caractérisée en ce que** ledit constituant a. de ladite composition constitué d'au moins un polyamide aliphatique noté B' ou noté C' comprend de plus un autre polyamide choisi parmi :
- au moins un polyamide noté A présentant un nombre moyen d'atomes de carbone par atome d'azote noté C_{A} compris entre 4 et 8,5, avantageusement entre 4 et 7 ;
- au moins un polyamide noté B" présentant une température de fusion supérieure ou égale à 180°C et un nombre moyen d'atomes de carbone par atome d'azote noté C_{B"} compris entre 7 et 10, avantageusement entre 7,5 et 9,5, lorsque ledit polyamide aliphatique est C',
- au moins un polyamide noté C" présentant un nombre moyen d'atomes de carbone par atome d'azote noté C_{C"} compris entre 9 et 18, avantageusement entre 10 et 18, lorsque ledit polyamide aliphatique est B';
ou un mélange de ceux-ci,
la moyenne pondérée massique des enthalpies de fusion des polyamides étant supérieure à 25J/g (DSC),
le nombre moyen d'atomes de carbone par atome d'azote des polyamides A, B', B", C'et C" répondant en outre à l'inéquation stricte suivante : C_{A} < C_{B'} ou C_{B"} < C_{C'} ou C_{C"}.

8. Structure tubulaire selon la revendication 6 ou 7, **caractérisée en ce que** la composition comprend de 34 à 84% en poids de polyamide aliphatique B' ou de polyamide aliphatique C' par rapport au poids total des polyamides présents au sein de ladite composition, de préférence entre 50 et 80%.

9. Structure tubulaire selon l'une des revendications 7 ou 8, **caractérisée en ce que** le polyamide A est choisi parmi le PA 6, le PA 46 et le PA 66, le polyamide B' est choisi parmi le PA 610, le PA 612, de préférence le PA 610 et le polyamide C" est choisi parmi le PA 11, le PA 12, le PA 1012, le PA 618 et le PA 1010 ou le polyamide polyamide A est choisi parmi le PA 6, le PA 46 et le PA 66, le polyamide B" est choisi parmi le PA 610, le PA 612, de préférence le PA 610 et le polyamide C' est choisi parmi le PA 1012, le PA 618 et le PA 1010.

10. Structure tubulaire selon l'une des revendications 1 à 9, **caractérisée en ce que** les additifs d. sont choisis parmi le noir de carbone, le graphite, le graphène, des fibres de carbone, des nanotubes de carbone, en particulier le noir de carbone et les nanotubes de carbone, un antioxydant, un stabilisant à la chaleur, un absorbeur d'UV, un stabilisant à la lumière, un lubrifiant, une charge inorganique, un agent ignifugeant, un agent nucléant, un colorant, des fibres de renfort, une cire et leurs mélanges.

11. Structure tubulaire selon la revendication 10, **caractérisée en ce que** ledit additif est au moins du noir de carbone.

12. Structure tubulaire selon la revendication 11, **caractérisée en ce que** ladite composition de ladite couche (1) comprend :
a. de 39% à 95% en poids, en particulier de 41% à 85% en poids d'au moins un polyamide aliphatique,
b. de 0 à 2% en poids d'un plastifiant,
c. de 0% à 20% d'au moins un modifiant choc,
d. de 5% à 32%, en particulier de 15 à 28% en poids d'un additif qui est le noir de carbone, et
de 0 à 5% en poids d'au moins un additif autre que le noir de carbone, le graphite, le graphène, des fibres de carbone et des nanotubes de carbone,
la somme a. + b. + c. + d. étant égale à 100%.

13. Structure tubulaire selon la revendication 11 ou 12, **caractérisée en ce que** ladite composition de ladite couche (1) comprend :
a. de 39% à 85% en poids, en particulier de 41% à 75% en poids d'au moins un polyamide aliphatique,
b. de 0 à 2% en poids d'un plastifiant,
c. de 10% à 18% d'au moins un modifiant choc,
d. de 5% à 32%, en particulier de 15 à 28% en poids d'un additif qui est le noir de carbone et
de 0 à 5% en poids d'au moins un additif autre que le noir de carbone, le graphite, le graphène, des fibres de carbone et des nanotubes de carbone,
la somme a. + b. + c. + d. étant égale à 100%.

14. Structure tubulaire selon la revendication 10, **caractérisée en ce que** ledit additif est au moins des nanotubes de carbone.

15. Structure tubulaire selon la revendication 14, **caractérisée en ce que** ladite composition de ladite couche (1) comprend :
a. de 70% à 99,5% en poids, notamment de 80% à 98% en poids, en particulier de 80% à 96% en poids d'au moins un polyamide aliphatique,
b. de 0 à 2% en poids d'un plastifiant,
c. de 0% à 20% d'au moins un modifiant choc,
d. de 0,5 à 10%, préférentiellement de 2% à 7%, en particulier de 4 à 5% en poids d'un additif qui est des nanotubes de carbone, et
de 0 à 19%, préférentiellement de 0 à 22%, en particulier de 0 à 24% en poids d'au moins un additif autre que le noir de carbone, le graphite, le graphène, des fibres de carbone et des nanotubes de carbone,
la somme a. + b. + c. + d. étant égale à 100%.

16. Structure tubulaire selon la revendication 14 ou 15, **caractérisée en ce que** ladite composition de ladite couche (1) comprend
a. de 70% à 89,5% en poids, notamment de 80% à 88% en poids, en particulier de 80% à 86% en poids d'au moins un polyamide aliphatique,
b. de 0 à 2% en poids d'un plastifiant,
c. de 10% à 18% d'au moins un modifiant choc,
d. de 0,5 à 10%, préférentiellement de 2% à 7%, en particulier de 4 à 5% en poids d'un additif qui est des nanotubes de carbone, et
de 0 à 19%, préférentiellement de 0 à 22%, en particulier de 0 à 24% en poids d'au moins un additif autre que le noir de carbone, le graphite, le graphène, des fibres de carbone et des nanotubes de carbone,
la somme a. + b. + c. + d. étant égale à 100%.

17. Structure tubulaire selon l'une des revendications 1 à 16, **caractérisée en ce que** la couche (1) est dépourvue de plastifiant.

18. Structure tubulaire selon l'une des revendications 1 à 17, **caractérisée en ce que** ladite structure est annelée sur au moins 10% de sa longueur.

19. Structure tubulaire selon l'une des revendications 1 à 18, **caractérisée en ce que** au moins 90% de la longueur de ladite structure est à l'intérieur du réservoir.

20. Structure tubulaire selon l'une des revendications 1 à 19, **caractérisée en ce que** au moins 30% de la longueur de ladite structure est immergée dans le carburant, préférentiellement au moins 80%.

21. Structure tubulaire selon l'une des revendications 1 à 12 et 17 à 20, **caractérisée en ce qu'**elle est constituée d'une seule couche et est dépourvue d'additif choisi parmi le noir de carbone, le graphite, le graphène, des fibres de carbone et des nanotubes de carbone.

22. Structure tubulaire selon la revendication 21, **caractérisée en ce que** l'épaisseur de ladite couche (1) est d'au moins 600µm.

23. Structure tubulaire selon l'une des revendications 1 à 20 et 22, **caractérisée en ce qu'**elle comprend au moins une deuxième couche (2) conductrice ou non, en particulier conductrice, ladite couche (1) étant située à l'extérieur ou à l'intérieur de la dite couche (2).

24. Structure tubulaire selon la revendication 23, **caractérisée en ce que** ladite couche (1) est située à l'extérieur de ladite couche (2).

25. Structure tubulaire selon l'une des revendication 23 ou 24, **caractérisée en ce que** ladite deuxième couche (2) comprend au moins un polyamide aliphatique ou des matériaux fluorés tel que le PVDF ou des matériaux fluorés fonctionnalisés tels que le copolymère d'éthylène et de tétrafluoroéthylène (ETFE) fonctionnalisé, le copolymère d'éthylène, de tétrafluoroéthylène et d'hexafluoro-propylène (EFEP) fonctionnalisé, un copolymère de tetrafluoroethylene-perfluoro(alkylvinylether)-chlorotrifluoroethylene (CPT).

26. Structure tubulaire selon l'une des revendications 23 ou 24, **caractérisée en ce que** ladite structure est dépourvue de couche barrière, ladite deuxième couche (2) comprenant au moins un polyamide aliphatique.

27. Utilisation d'une structure tubulaire telle que définie dans l'une des revendications 1 à 26, pour le transport de carburants dans le réservoir, en particulier le transport de l'essence dans le réservoir.

28. Utilisation d'une structure tubulaire telle que définie dans l'une des revendications 1 à 26, pour satisfaire un test d'extractibles, ledit test consistant notamment à remplir ladite structure tubulaire multicouche MLT d'essence alcoolisée type FAM-B et à chauffer l'ensemble à 60°C pendant 96 heures, puis à le vider en le filtrant dans un bécher, puis à laisser le filtrat du bécher s'évaporer à température ambiante pour enfin peser ce résidu dont la proportion doit être inférieure ou égale à environ 10g/m2 de surface interne de tube, de préférence inférieure ou égale à environ 6g/m².

## Patentansprüche

1. Teilweise ringförmige biegsame Rohrstruktur, die dazu vorgesehen ist, zumindest teilweise im Inneren eines Kraftstofftanks, in besonderer Weise eines Benzin- oder Diesel-, insbesondere eines Benzintanks, angeordnet zu werden, wobei die Struktur zumindest teilweise in den Tank eingetaucht sein kann und zum Transport des Kraftstoffs in den Tank vorgesehen ist,
wobei die Rohrstruktur mindestens eine Schicht (1) umfasst, die aus einer Zusammensetzung besteht, die aus Folgendem besteht:
a. von 39 Gew.-% bis 100 Gew.-%, insbesondere von 41 Gew.-% bis 100 Gew.-%, mindestens eines aliphatischen Polyamids der Formel W/Z, wobei:
W eine aliphatische Repetiereinheit ist, die aus der Polykondensation mindestens eines C₆- bis C₁₈-, vorzugsweise C₇- bis C₁₃-Lactams oder mindestens einer C₆-bis C₁₈-, vorzugsweise C₇- bis C₁₃-Aminocarbonsäure erhalten wird, oder eine aliphatische Repetiereinheit XY ist, die eine mittlere Zahl von Kohlenstoffatomen pro bezeichnetes Stickstoffatom von 6 bis 18, vorzugsweise von 7 bis 13, aufweist, die aus der Polykondensation des Folgenden erhalten wird:
- mindestens eines C₆- bis C₁₈-Diamins X, wobei das Diamin aus einem linearen oder verzweigten aliphatischen Diamin oder einer Mischung davon ausgewählt ist, und
- mindestens einer aliphatischen C₆- bis C₁₈-Dicarbonsäure Y,
Z mindestens eine optionale Polyamid-Repetiereinheit ist, wobei Z bis 30 Gew.-%, bezogen auf das Gesamtgewicht W/Z, vorzugsweise bis 15 Gew.-%, bezogen auf das Gesamtgewicht W/Z, vorhanden sein kann,
b. von 0 bis 2 Gew.-% mindestens eines Weichmachers,
c. von 0 % bis 20 % mindestens eines Schlagfestmachers,
d. von 0 Gew.-% bis 37 Gew.-% mindestens eines Additivs,
wobei die Summe von a. + b. + c. + d. gleich 100 % ist, mit Ausnahme einer Kraftstofftransportstruktur, die vom Tank zum Motor des Fahrzeugs verläuft.

2. Rohrstruktur nach Anspruch 1, **dadurch gekennzeichnet, dass** es sich bei dem mindestens einen aliphatischen Polyamid um mindestens ein als C bezeichnetes Polyamid handelt, das aus der Polykondensation mindestens eines C₆- bis C₁₈-, vorzugsweise C₇- bis C₁₃-Lactams, oder mindestens einer C₆- bis C₁₈-, vorzugsweise C₇- bis C₁₃-Aminocarbonsäure erhalten wird und eine als C_{C} bezeichnete mittlere Zahl von Kohlenstoffatomen pro Stickstoffatom zwischen 9 und 18, vorteilhafterweise zwischen 10 und 18, aufweist.

3. Rohrstruktur nach Anspruch 2, **dadurch gekennzeichnet, dass** der Bestandteil a. der Zusammensetzung außerdem ein anderes Polyamid umfasst, das ausgewählt ist aus:
- mindestens einem als A bezeichneten Polyamid, das eine als C_{A} bezeichnete mittlere Zahl von Kohlenstoffatomen pro Stickstoffatom zwischen 4 und 8,5, vorteilhafterweise zwischen 4 und 7, aufweist;
- mindestens einem als B bezeichneten Polyamid, das eine Schmelztemperatur von mehr als oder gleich 180 °C und eine als C_{B} bezeichnete mittlere Zahl von Kohlenstoffatomen pro Stickstoffatom zwischen 7 und 10, vorteilhafterweise zwischen 7,5 und 9,5, aufweist;
oder einer Mischung davon,
wobei das gewichtete Massenmittel der Schmelzenthalpien der Polyamide mehr als 25 J/g (DSC) beträgt,
die mittlere Zahl von Kohlenstoffatomen pro Stickstoffatom der Polyamide A, B und C außerdem der folgenden strikten Ungleichung entspricht: C_{A} < C_{B} < C_{C}.

4. Rohrstruktur nach Anspruch 2 oder 3, **dadurch gekennzeichnet, dass** die Zusammensetzung 34 bis 84 Gew.-%, vorzugsweise zwischen 50 und 80 Gew.-%, aliphatisches Polyamid C, bezogen auf das Gesamtgewicht der in der Zusammensetzung vorhandenen Polyamide, umfasst.

5. Rohrstruktur nach einem der Ansprüche 3 oder 4, **dadurch gekennzeichnet, dass** das Polyamid A aus PA 6, PA 46 und PA 66 ausgewählt ist, das Polyamid B aus PA 610, PA 612, vorzugsweise PA 610, ausgewählt ist und das Polyamid C aus PA 11, PA 12 ausgewählt ist.

6. Rohrstruktur nach Anspruch 1, **dadurch gekennzeichnet, dass** W in dem mindestens einen aliphatischen Polyamid der Formel W/Z eine aliphatische Repetiereinheit XY ist, bei der es sich um ein als B' bezeichnetes Polyamid, das eine Schmelztemperatur von mehr als oder gleich 180 °C und eine als C_{B'} bezeichnete mittlere Zahl von Kohlenstoffatomen pro Stickstoffatom zwischen 7 und 10, vorteilhafterweise zwischen 7,5 und 9,5, oder um ein als C' bezeichnetes Polyamid handelt, das eine als C_{C'} bezeichnete mittlere Zahl von Kohlenstoffatomen pro Stickstoffatom zwischen 9 und 18, vorteilhafterweise zwischen 10 und 18, aufweist.

7. Rohrstruktur nach Anspruch 6, **dadurch gekennzeichnet, dass** der Bestandteil a. der Zusammensetzung, der aus mindestens einem als B' bezeichneten oder als C' bezeichneten aliphatischen Polyamid besteht, außerdem ein anderes Polyamid umfasst, das ausgewählt ist aus:
- mindestens einem als A bezeichneten Polyamid, das eine als C_{A} bezeichnete mittlere Zahl von Kohlenstoffatomen pro Stickstoffatom zwischen 4 und 8,5, vorteilhafterweise zwischen 4 und 7, aufweist;
- mindestens einem als B" bezeichneten Polyamid, das eine Schmelztemperatur von mehr als oder gleich 180 °C und eine als C_{B"} bezeichnete mittlere Zahl von Kohlenstoffatomen pro Stickstoffatom zwischen 7 und 10, vorteilhafterweise zwischen 7,5 und 9,5, aufweist, wenn es sich bei dem aliphatischen Polyamid um C' handelt,
- mindestens einem als C" bezeichneten Polyamid, das eine als C_{C"} bezeichnete mittlere Zahl von Kohlenstoffatomen pro Stickstoffatom zwischen 9 und 18, vorteilhafterweise zwischen 10 und 18, aufweist, wenn es sich bei dem aliphatischen Polyamid um B' handelt;
oder einer Mischung davon,
wobei das gewichtete Massenmittel der Schmelzenthalpien der Polyamide mehr als 25 J/g (DSC) beträgt,
die mittlere Zahl von Kohlenstoffatomen pro Stickstoffatom der Polyamide A, B', B", C' und C" außerdem der folgenden strikten Ungleichung entspricht: C_{A} < C_{B'} ·oder C_{B"} < C_{C'} oder C_{C"}.

8. Rohrstruktur nach Anspruch 6 oder 7, **dadurch gekennzeichnet, dass** die Zusammensetzung 34 bis 84 Gew.-%, vorzugsweise zwischen 50 und 80 Gew.-%, aliphatisches Polyamid B' oder aliphatisches Polyamid C', bezogen auf das Gesamtgewicht der in der Zusammensetzung vorhandenen Polyamide, umfasst.

9. Rohrstruktur nach einem der Ansprüche 7 oder 8, **dadurch gekennzeichnet, dass** das Polyamid A aus PA 6, PA 46 und PA 66 ausgewählt ist, das Polyamid B' aus PA 610, PA 612, vorzugsweise PA 610, ausgewählt ist und das Polyamid C" aus PA 11, PA 12, PA 1012, PA 618 und PA 1010 ausgewählt ist oder das Polyamid Polyamid A aus PA 6, PA 46 und PA 66 ausgewählt ist, das Polyamid B" aus PA 610, PA 612, vorzugsweise PA 610, ausgewählt ist und das Polyamid C' aus PA 1012, PA 618 und PA 1010 ausgewählt ist.

10. Rohrstruktur nach einem der Ansprüche 1 bis 9, **dadurch gekennzeichnet, dass** die Additive d. aus Ruß, Graphit, Graphen, Kohlenstofffasern, Kohlenstoff-Nanoröhrchen, insbesondere aus Ruß und Kohlenstoff-Nanoröhrchen, einem Antioxidans, einem Wärmestabilisator, einem UV-Absorptionsmittel, einem Lichtstabilisator, einem Gleitmittel, einem anorganischen Füllstoff, einem flammhemmenden Mittel, einem Keimbildungsmittel, einem farbgebenden Mittel, Verstärkungsfasern, einem Wachs und Mischungen davon ausgewählt sind.

11. Rohrstruktur nach Anspruch 10, **dadurch gekennzeichnet, dass** es sich bei dem Additiv zumindest um Ruß handelt.

12. Rohrstruktur nach Anspruch 11, **dadurch gekennzeichnet, dass** die Zusammensetzung der Schicht (1) Folgendes umfasst:
a. von 39 Gew.-% bis 95 Gew.-%, insbesondere von 41 Gew.-% bis 85 Gew.-%, mindestens eines aliphatischen Polyamids,
b. von 0 bis 2 Gew.-% eines Weichmachers,
c. von 0 % bis 20 % mindestens eines Schlagfestmachers,
d. von 5 Gew.-% bis 32 Gew.-%, insbesondere von 15 bis 28 Gew.-%, eines Additivs, bei dem es sich um Ruß handelt, und
von 0 bis 5 Gew.-% mindestens eines Additivs, das von Ruß, Graphit, Graphen, Kohlenstofffasern und Kohlenstoff-Nanoröhrchen verschieden ist,
wobei die Summe von a. + b. + c. + d. gleich 100 % ist.

13. Rohrstruktur nach Anspruch 11 oder 12, **dadurch gekennzeichnet, dass** die Zusammensetzung der Schicht (1) Folgendes umfasst:
a. von 39 Gew.-% bis 85 Gew.-%, insbesondere von 41 Gew.-% bis 75 Gew.-%, mindestens eines aliphatischen Polyamids,
b. von 0 bis 2 Gew.-% eines Weichmachers,
c. von 10 % bis 18 % mindestens eines Schlagfestmachers,
d. von 5 Gew.-% bis 32 Gew.-%, insbesondere von 15 bis 28 Gew.-%, eines Additivs, bei dem es sich um Ruß handelt, und
von 0 bis 5 Gew.-% mindestens eines Additivs, das von Ruß, Graphit, Graphen, Kohlenstofffasern und Kohlenstoff-Nanoröhrchen verschieden ist,
wobei die Summe von a. + b. + c. + d. gleich 100 % ist.

14. Rohrstruktur nach Anspruch 10, **dadurch gekennzeichnet, dass** es sich bei dem Additiv zumindest um Kohlenstoff-Nanoröhrchen handelt.

15. Rohrstruktur nach Anspruch 14, **dadurch gekennzeichnet, dass** die Zusammensetzung der Schicht (1) Folgendes umfasst:
a. von 70 Gew.-% bis 99,5 Gew.-%, insbesondere von 80 Gew.-% bis 98 Gew.-%, in besonderer Weise von 80 Gew.-% bis 96 Gew.-%, mindestens eines aliphatischen Polyamids,
b. von 0 bis 2 Gew.-% eines Weichmachers,
c. von 0 % bis 20 % mindestens eines Schlagfestmachers,
d. von 0,5 bis 10 Gew.-%, vorzugsweise von 2 Gew.-% bis 7 Gew.-%, insbesondere von 4 bis 5 Gew.-%, eines Additivs, bei dem es sich um Kohlenstoff-Nanoröhrchen handelt, und
von 0 bis 19 Gew.-%, vorzugsweise von 0 bis 22 Gew.-%, insbesondere von 0 bis 24 Gew.-%, mindestens eines Additivs, das von Ruß, Graphit, Graphen, Kohlenstofffasern und Kohlenstoff-Nanoröhrchen verschieden ist,
wobei die Summe von a. + b. + c. + d. gleich 100 % ist.

16. Rohrstruktur nach Anspruch 14 oder 15, **dadurch gekennzeichnet, dass** die Zusammensetzung der Schicht (1) Folgendes umfasst:
a. von 70 Gew.-% bis 89,5 Gew.-%, insbesondere von 80 Gew.-% bis 88 Gew.-%, in besonderer Weise von 80 Gew.-% bis 86 Gew.-%, mindestens eines aliphatischen Polyamids,
b. von 0 bis 2 Gew.-% eines Weichmachers,
c. von 10 % bis 18 % mindestens eines Schlagfestmachers,
d. von 0,5 bis 10 Gew.-%, vorzugsweise von 2 Gew.-% bis 7 Gew.-%, insbesondere von 4 bis 5 Gew.-%, eines Additivs, bei dem es sich um Kohlenstoff-Nanoröhrchen handelt, und
von 0 bis 19 Gew.-%, vorzugsweise von 0 bis 22 Gew.-%, insbesondere von 0 bis 24 Gew.-%, mindestens eines Additivs, das von Ruß, Graphit, Graphen, Kohlenstofffasern und Kohlenstoff-Nanoröhrchen verschieden ist,
wobei die Summe von a. + b. + c. + d. gleich 100 % ist.

17. Rohrstruktur nach einem der Ansprüche 1 bis 16, **dadurch gekennzeichnet, dass** die Schicht (1) frei von Weichmacher ist.

18. Rohrstruktur nach einem der Ansprüche 1 bis 17, **dadurch gekennzeichnet, dass** die Struktur über mindestens 10 % ihrer Länge ringförmig ist.

19. Rohrstruktur nach einem der Ansprüche 1 bis 18, **dadurch gekennzeichnet, dass** sich mindestens 90 % der Länge der Struktur im Inneren des Tanks befinden.

20. Rohrstruktur nach einem der Ansprüche 1 bis 19, **dadurch gekennzeichnet, dass** mindestens 30 %, vorzugsweise mindestens 80 %, der Länge der Struktur in den Kraftstoff eingetaucht sind.

21. Rohrstruktur nach einem der Ansprüche 1 bis 12 und 17 bis 20, **dadurch gekennzeichnet, dass** sie aus einer einzigen Schicht besteht und frei von einem Additiv ist, das aus Ruß, Graphit, Graphen, Kohlenstofffasern und Kohlenstoff-Nanoröhrchen ausgewählt ist.

22. Rohrstruktur nach Anspruch 21, **dadurch gekennzeichnet, dass** die Dicke der Schicht (1) mindestens 600 µm beträgt.

23. Rohrstruktur nach einem der Ansprüche 1 bis 20 und 22, **dadurch gekennzeichnet, dass** sie mindestens eine gegebenenfalls leitfähige, insbesondere leitfähige, zweite Schicht (2) umfasst, wobei sich die Schicht (1) außer- oder innerhalb der Schicht (2) befindet.

24. Rohrstruktur nach Anspruch 23, **dadurch gekennzeichnet, dass** sich die Schicht (1) außerhalb der Schicht (2) befindet.

25. Rohrstruktur nach einem der Ansprüche 23 oder 24, **dadurch gekennzeichnet, dass** die zweite Schicht (2) mindestens ein aliphatisches Polyamid oder fluorierte Materialien, wie PVDF, oder funktionalisierte fluorierte Materialien, wie funktionalisiertes Ethylen-Tetrafluorethylen- (ETFE-)Copolymer, funktionalisiertes Ethylen-Tetrafluorethylen-Hexafluorpropylen- (EFEP-)Copolymer, ein Tetrafluorethylen-Perfluor(alkylvinylether)-Chlortrifluorethylen- (CPT-)Copolymer umfasst.

26. Rohrstruktur nach einem der Ansprüche 23 oder 24, **dadurch gekennzeichnet, dass** die Struktur frei von einer Sperrschicht ist, wobei die zweite Schicht (2) mindestens ein aliphatisches Polyamid umfasst.

27. Verwendung einer Rohrstruktur gemäß der Definition in einem der Ansprüche 1 bis 26 zum Transport von Kraftstoffen in den Tank, insbesondere zum Transport von Benzin in den Tank.

28. Verwendung einer Rohrstruktur gemäß der Definition in einem der Ansprüche 1 bis 26 zum Bestehen eines Tests auf extrahierbare Stoffe, wobei der Test insbesondere darin besteht, die mehrschichtige Rohrstruktur MLT mit alkoholhaltigem Benzin vom Typ FAM-B zu füllen und die Anordnung 96 Stunden lang auf 60 °C zu erwärmen, sie dann zu leeren, wobei sie in ein Becherglas filtriert wird, dann das Filtrat im Becherglas bei Umgebungstemperatur verdampfen zu lassen, um schließlich den Rückstand zu wiegen, wobei dessen Anteil kleiner als oder gleich etwa 10 g/m², vorzugsweise kleiner als oder gleich etwa 6 g/m², Innenfläche des Rohrs sein muss.

## Claims

1. Flexible, partially corrugated tubular structure intended to be placed at least partially inside the fuel tank, in particular petrol or diesel tank, in particular petrol tank, of a vehicle, it being possible for said structure to be at least partially immersed in said tank and intended to transport said fuel in said tank,
said tubular structure comprising at least one layer (1) consisting of a composition consisting of:
a. from 39% to 100% by weight, in particular from 41% to 100% by weight, of at least one aliphatic polyamide of formula W/Z, in which:
W is an aliphatic repeating unit obtained from the polycondensation of at least one C₆ to C₁₈, preferentially C₇ to C₁₃, lactam, or at least one C₆ to C₁₈, preferentially C₇ to C₁₃, aminocarboxylic acid, or is an aliphatic repeating unit XY having a mean number of carbon atoms per nitrogen atom denoted of from 6 to 18, preferentially from 7 to 13, obtained from the polycondensation:
- of at least one C₆ to C₁₈ diamine X, said diamine being selected from a linear or branched aliphatic diamine or a mixture thereof, and
- of at least one aliphatic C₆ to C₁₈ dicarboxylic acid Y,
Z is at least one optional polyamide repeating unit, where Z may be present up to 30% by weight relative to the total weight W/Z, preferentially up to 15% by weight relative to the total weight W/Z,
b. from 0% to 2% by weight of at least one plasticizer,
c. from 0% to 20% of at least one impact modifier,
d. from 0% to 37% by weight of at least one additive, the sum a. + b. + c. + d. being equal to 100%, excluding a structure for transporting fuel going from the tank to the engine of the vehicle.

2. Tubular structure according to Claim 1, **characterized in that** said at least one aliphatic polyamide is at least one polyamide, denoted C, obtained from the polycondensation of at least one C₆ to C₁₈, preferentially C₇ to C₁₃, lactam, or at least one C₆ to C₁₈, preferentially C₇ to C₁₃, aminocarboxylic acid, and having a mean number of carbon atoms per nitrogen atom, denoted C_{C}, of between 9 and 18, advantageously between 10 and 18.

3. Tubular structure according to Claim 2, **characterized in that** said constituent a. of said composition further comprises another polyamide selected from:
- at least one polyamide, denoted A, having a mean number of carbon atoms per nitrogen atom, denoted C_{A}, of between 4 and 8.5, advantageously between 4 and 7;
- at least one polyamide, denoted B, having a melting point of greater than or equal to 180°C and a mean number of carbon atoms per nitrogen atom, denoted C_{B}, of between 7 and 10, advantageously between 7.5 and 9.5;
or a mixture thereof,
the weighted mean by mass of the enthalpies of fusion of the polyamides being greater than 25 J/g (DSC),
the mean number of carbon atoms per nitrogen atom of the polyamides A, B and C additionally corresponding to the following strict inequation: C_{A} < C_{B} < C_{C}.

4. Tubular structure according to Claim 2 or 3, **characterized in that** the composition comprises from 34% to 84% by weight of aliphatic polyamide C relative to the total weight of the polyamides present within said composition, preferably between 50% and 80%.

5. Tubular structure according to either of Claims 3 and 4, **characterized in that** polyamide A is selected from PA 6, PA 46 and PA 66, polyamide B is selected from PA 610 and PA 612, preferably PA 610, and polyamide C is selected from PA 11 and PA 12.

6. Tubular structure according to Claim 1, **characterized in that** W in said at least one aliphatic polyamide of formula W/Z is an aliphatic repeating unit XY which is a polyamide, denoted B', having a melting point of greater than or equal to 180°C and a mean number of carbon atoms per nitrogen atom, denoted C_{B'}, of between 7 and 10, advantageously between 7.5 and 9.5, or a polyamide, denoted C', having a mean number of carbon atoms per nitrogen atom, denoted C_{C'}, of between 9 and 18, advantageously between 10 and 18.

7. Tubular structure according to Claim 6, **characterized in that** said constituent a. of said composition consisting of at least one aliphatic polyamide denoted B' or denoted C' additionally comprises another polyamide selected from:
- at least one polyamide, denoted A, having a mean number of carbon atoms per nitrogen atom, denoted C_{A}, of between 4 and 8.5, advantageously between 4 and 7;
- at least one polyamide, denoted B", having a melting point of greater than or equal to 180°C and a mean number of carbon atoms per nitrogen atom, denoted C_{B"}, of between 7 and 10, advantageously between 7.5 and 9.5, when said aliphatic polyamide is C',
- at least one polyamide, denoted C", having a mean number of carbon atoms per nitrogen atom, denoted C_{C"}, of between 9 and 18, advantageously between 10 and 18, when said aliphatic polyamide is B';
or a mixture thereof,
the weighted mean by mass of the enthalpies of fusion of the polyamides being greater than 25 J/g (DSC),
the mean number of carbon atoms per nitrogen atom of the polyamides A, B', B", C' and C" additionally corresponding to the following strict inequation: C_{A} < C_{B'} or C_{B"} < C_{C'} or C_{C"}.

8. Tubular structure according to Claim 6 or 7, **characterized in that** the composition comprises from 34% to 84% by weight of aliphatic polyamide B' or aliphatic polyamide C' relative to the total weight of the polyamides present within said composition, preferably between 50% and 80%.

9. Tubular structure according to either of Claims 7 and 8, **characterized in that** polyamide A is selected from PA 6, PA 46 and PA 66, polyamide B' is selected from PA 610 and PA 612, preferably PA 610, and polyamide C" is selected from PA 11, PA 12, PA 1012, PA 618 and PA 1010, or the polyamide polyamide A is selected from PA 6, PA 46 and PA 66, polyamide B" is selected from PA 610 and PA 612, preferably PA 610, and polyamide C' is selected from PA 1012, PA 618 and PA 1010.

10. Tubular structure according to one of Claims 1 to 9, **characterized in that** the additives d. are selected from carbon black, graphite, graphene, carbon fibres, carbon nanotubes, in particular carbon black and carbon nanotubes, an antioxidant, a heat stabilizer, a UV absorber, a light stabilizer, a lubricant, an inorganic filler, a flame retardant, a nucleating agent, a colorant, reinforcing fibres, a wax, and mixtures thereof.

11. Tubular structure according to Claim 10, **characterized in that** said additive is at least carbon black.

12. Tubular structure according to Claim 11, **characterized in that** said composition of said layer (1) comprises:
a. from 39% to 95% by weight, in particular from 41% to 85% by weight, of at least one aliphatic polyamide,
b. from 0% to 2% by weight of a plasticizer,
c. from 0% to 20% of at least one impact modifier,
d. from 5% to 32%, in particular from 15% to 28%, by weight of an additive which is carbon black, and
from 0% to 5% by weight of at least one additive other than carbon black, graphite, graphene, carbon fibres and carbon nanotubes,
the sum a. + b. + c. + d. being equal to 100%.

13. Tubular structure according to Claim 11 or 12, **characterized in that** said composition of said layer (1) comprises:
a. from 39% to 85% by weight, in particular from 41% to 75% by weight, of at least one aliphatic polyamide,
b. from 0% to 2% by weight of a plasticizer,
c. from 10% to 18% of at least one impact modifier,
d. from 5% to 32%, in particular from 15% to 28%, by weight of an additive which is carbon black, and
from 0% to 5% by weight of at least one additive other than carbon black, graphite, graphene, carbon fibres and carbon nanotubes,
the sum a. + b. + c. + d. being equal to 100%.

14. Tubular structure according to Claim 10, **characterized in that** said additive is at least carbon nanotubes.

15. Tubular structure according to Claim 14, **characterized in that** said composition of said layer (1) comprises:
a. from 70% to 99.5% by weight, particularly from 80% to 98% by weight, in particular from 80% to 96% by weight, of at least one aliphatic polyamide,
b. from 0% to 2% by weight of a plasticizer,
c. from 0% to 20% of at least one impact modifier,
d. from 0.5% to 10%, preferentially from 2% to 7%, in particular from 4% to 5%, by weight of an additive which is carbon nanotubes, and
from 0% to 19%, preferentially from 0% to 22%, in particular from 0% to 24%, by weight of at least one additive other than carbon black, graphite, graphene, carbon fibres and carbon nanotubes,
the sum a. + b. + c. + d. being equal to 100%.

16. Tubular structure according to Claim 14 or 15, **characterized in that** said composition of said layer (1) comprises
a. from 70% to 89.5% by weight, particularly from 80% to 88% by weight, in particular from 80% to 86% by weight, of at least one aliphatic polyamide,
b. from 0% to 2% by weight of a plasticizer,
c. from 10% to 18% of at least one impact modifier,
d. from 0.5% to 10%, preferentially from 2% to 7%, in particular from 4% to 5%, by weight of an additive which is carbon nanotubes, and
from 0% to 19%, preferentially from 0% to 22%, in particular from 0% to 24%, by weight of at least one additive other than carbon black, graphite, graphene, carbon fibres and carbon nanotubes,
the sum a. + b. + c. + d. being equal to 100%.

17. Tubular structure according to one of Claims 1 to 16, **characterized in that** the layer (1) is devoid of plasticizer.

18. Tubular structure according to one of Claims 1 to 17, **characterized in that** said structure is corrugated over at least 10% of its length.

19. Tubular structure according to one of Claims 1 to 18, **characterized in that** at least 90% of the length of said structure is inside the tank.

20. Tubular structure according to one of Claims 1 to 19, **characterized in that** at least 30% of the length of said structure is immersed in the fuel, preferentially at least 80%.

21. Tubular structure according to one of Claims 1 to 12 and 17 to 20, **characterized in that** it consists of a single layer and is devoid of additives selected from carbon black, graphite, graphene, carbon fibres and carbon nanotubes.

22. Tubular structure according to Claim 21, **characterized in that** the thickness of said layer (1) is at least 600 µm.

23. Tubular structure according to one of Claims 1 to 20 and 22, **characterized in that** it comprises at least one second layer (2) which may or may not be conductive, and in particular is conductive, said layer (1) being situated on the outside or on the inside of said layer (2).

24. Tubular structure according to Claim 23, **characterized in that** said layer (1) is situated on the outside of said layer (2).

25. Tubular structure according to either of Claims 23 and 24, **characterized in that** said second layer (2) comprises at least one aliphatic polyamide or fluorinated materials such as PVDF or functionalized fluorinated materials such as functionalized ethylene-tetrafluoroethylene (ETFE) copolymer, functionalized ethylene-tetrafluoroethylene-hexafluoropropylene (EFEP) copolymer, a tetrafluoroethylene-perfluoro(alkyl vinyl ether)-chlorotrifluoroethylene (CPT) copolymer.

26. Tubular structure according to either of Claims 23 and 24, **characterized in that** said structure is devoid of a barrier layer, said second layer (2) comprising at least one aliphatic polyamide.

27. Use of a tubular structure as defined in one of Claims 1 to 26, for the transport of fuels in the tank, in particular the transport of petrol in the tank.

28. Use of a tubular structure as defined in one of Claims 1 to 26, for complying with an extractables test, said test consisting especially in filling said multilayer tubular structure MLT with alcohol-blended petrol of FAM B type and in heating everything at 60°C for 96 hours, then in emptying it by filtering it into a beaker, then in leaving the filtrate of the beaker to evaporate at ambient temperature, in order to finally weigh this residue, the proportion of which must be less than or equal to 10 g/m² of tube inner surface area, preferably less than or equal to approximately 6 g/m².
